# EUROPEAN PATENT APPLICATION

(11) **EP 3 817 426 A1**
(43) Date of publication of application: **05.05.2021**
(21) Application number: 19826168.7
(22) Date of filing: 13.06.2019
(51) Int. Cl.: H04W 16/14, H04W 72/08

(54) **COMMUNICATION DEVICE AND COMMUNICATION METHOD**

(30) Priority: 28.06.2018 JP 2018123023
(71) Applicant: Sharp Kabushiki Kaisha, Sakai-shi Osaka 590-8522 (JP); FG Innovation Company Limited, Hong Kong (CN)
(72) Inventor: TOMEBA, Hiromichi, Sakai City, Osaka 590-8522 (JP); YAMADA, Ryota, Sakai City, Osaka 590-8522 (JP)
(74) Representative: Müller Hoffmann & Partner
(86) International application number: PCT/JP2019/023575
(87) International publication number: WO 2020/004070

(57) **Abstract**

Provided are a communications device and a communication method for implementing coexistence with another wireless access system, that is, fair access to a wireless medium while reducing interfering power and interfered power, thereby improving the frequency usage efficiency or throughput. The communications device is provided with: a reception unit that executes carrier-sense for reserving a wireless medium; a control unit that sets a plurality of wireless medium acquisition classes; and a transmission unit that transmits a radio signal, wherein the wireless medium acquisition classes each represent a value at least indicating a data transmission period and an idle period, the wireless medium acquisition classes are obtained by classification based on the length of a fixed frame period including at least the data transmission period and the idle period, and the transmission unit transmits a signal including information which indicates that selection from among the wireless medium acquisition classes has been performed.

## Description

### FIELD

The present disclosure relates to a communications device and communication method. The present disclosure claims the benefit of and priority to Japanese Patent Application No. 2018-123023 ("the '023 application"), filed on June 28, 2018. The content(s) of the '023 application are fully incorporated herein by reference for all purposes.

### BACKGROUND

With the aim to commence commercial services around 2020, research and development activities related to the fifth generation mobile radio communication system (the 5G system) have been actively conducted. Recently, the International Telecommunication Union Radio Communications Sector (ITU-R), an international standardization organization, has issued a vision recommendation on the standard scheme of 5G systems (International mobile telecommunication-2020 and beyond: IMT-2020) (referring to Non-Patent Literature 1).

Based on communication systems responding to the rapid increase in data service, ensuring frequency resources is becoming an important task. Therefore, one of the objectives of 5G is to realize ultra-large-capacity communication using a higher frequency band than a frequency band used in the Long Term Evolution (LTE).

On the other hand, based on cellular services responding to the rapid increase in data service, ensuring frequency resources is also an important task. Until now, the frequency bands assumed for cellular services for use are permitted by the country or region where the wireless service providers. These frequency bands are called the licensed bands. There are limited useable frequency bands.

Therefore, providing cellular services using unlicensed bands, which do not require permission for use from a country or a region, is being discussed recently. It can also be expected that, in 5G, by applying the carrier aggregation technology utilized in the LTE-A system to the unlicensed bands effectively responding to the rapid increase in data service (referring to Non-Patent Literature 3).

### Prior Art Documents

### Non-Patent Literature

Non-Patent Literature 1: "IMT Vision-Framework and overall objectives of the future development of IMT for 2020 and beyond," Recommendation ITU-R M. 2083-0, Sept. 2015.
Non-Patent Literature 2: E. G. Larsson, O. Edfors, F. Tufvesson, and T. L. Marzetta, "Massive MIMO for next generation wireless system," IEEE Commun. Mag., vol. 52, no.2, pp. 186-195, Feb. 2014.
Non-Patent Literature 3: 3GPP RP-170205, "Study on NR-based Access to Unlicensed Spectrum," March 2017.

### SUMMARY

### PROBLEMS TO BE ADDRESSED

However, the unlicensed band is shared with other wireless access systems. As other wireless access systems, in addition to the systems that have been widely used in unlicensed bands as represented by wireless LANs, it is expected to have a new wireless access system, such as LTE-U which is specified according to the LAA specified in Release 13 of 3GPP and the LTE frame format. There exists a requirement to achieve a high frequency usage efficiency while coexisting with these.

An aspect of the present disclosure is implemented in this circumstance, with the objective to provide a communications device and communication method that is capable of coexisting with other wireless access systems, reduces interfering power and interfered power and realizes fair access to the wireless medium, and, thereby, increases the frequency usage efficiency or throughput.

### TECHNOLOGY ASPECTS

For addressing the above problems, an aspect of a communications device and a communication method of the present disclosure is provided with the following details.
(1) An aspect of a communications device of the present disclosure is a communications device for performing carrier-sense, the communications device comprising: a reception unit for executing carrier-sense for reserving a wireless medium; a control unit for setting a plurality of wireless medium acquisition classes; and a transmission unit for transmitting a radio signal, wherein the wireless medium acquisition classes represent a value at least indicating a data transmission period and an idle period, the plurality of wireless medium acquisition classes are classified based on a length of a fixed frame period including at least the data transmission period and the idle period, and the transmission unit transmits a signal including information indicating a selection of the wireless medium acquisition classes is performed.
(2) Additionally, an aspect of a communications device of the present disclosure is a communications device as described in (1), wherein, the wireless medium acquisition class further indicates a value indicating a contention period, the contention period is included in the data transmission period.
(3) Additionally, an aspect of a communications device of the present disclosure is a communications device as described in (2), wherein, the contention period is divided by timeslot having a predetermined period, a random number is generated with a predetermined value associated with the contention period as a maximum value, the random number is subtracted based on a result of the carrier-sense during the contention period, and a length of a period obtained by multiplying the random number and the predetermined period is longer than the contention period.
(4) Additionally, an aspect of a communications device of the present disclosure is a communications device as described in (3), wherein, the contention period is set at a start of the data transmission period, after the contention period, the random number is continuously subtracted based on a result of the carrier-sense in the data transmission period.
(5) Additionally, an aspect of a communications device of the present disclosure is a communications device as described in (2), wherein, the contention period is set at a start of the data transmission period.
(6) Additionally, an aspect of a communications device of the present disclosure is a communications device as described in (2), wherein, the idle period is set to follow the data transmission period, the contention period is set at an end of the data transmission period.
(7) Additionally, an aspect of a communications device of the present disclosure is a communications device as described in (1), wherein, the control unit divides the wireless medium performing the carrier-sense into a plurality of frequency bands, the transmission unit randomly selects any one of the plurality of frequency bands during the data transmission period.
(8) Additionally, an aspect of a communications device of the present disclosure is a communications device as described in (7), wherein, the transmission unit transmits a signal occupying a predetermined bandwidth in the wireless medium performing the carrier-sense at a start of the data transmission period.
(9) Additionally, an aspect of a communications device of the present disclosure is a communications device as described in (8), wherein, the transmission unit generates a signal occupying the predetermined bandwidth based on a predetermined rule.
(10) Additionally, an aspect of a communications device of the present disclosure is a communication method having steps of performing carrier-sense, comprising the steps of: executing carrier-sense for reserving a wireless medium; setting a plurality of wireless medium acquisition classes; and transmitting a radio signal, wherein the wireless medium acquisition classes represent a value at least indicating a data transmission period and an idle period, the plurality of wireless medium acquisition classes are classified based on a length of a fixed frame period including at least the data transmission period and the idle period, and transmitting a signal including information indicating a selection of the wireless medium acquisition classes is performed.

### EFFECTS

According to an aspect of the present disclosure, it reduces interfering power and interfered power comparing to other wireless access system, realizes fair access to a wireless medium, increase the frequency usage efficiency or throughput.

### BRIEF DESCRIPTION OF THE DRAWINGS

Figure 1 is a schematic diagram of a communication system according to an aspect of the present disclosure.
Figure 2 is a block diagram of a base station device according to an aspect of the present disclosure.
Figure 3 is a block diagram of a terminal device according to an aspect of the present disclosure.
Figure 4 is a schematic diagram of a communication system according to an aspect of the present disclosure.
Figure 5 is a schematic diagram of a communication system according to an aspect of the present disclosure.
Figure 6 is a schematic diagram of a communication method according to an aspect of the present disclosure.
Figure 7 is a schematic diagram of a communication method according to an aspect of the present disclosure.
Figure 8 is a schematic diagram of a communication method according to an aspect of the present disclosure.
Figure 9 is a schematic diagram of a communication method according to an aspect of the present disclosure.
Figure 10 is a schematic diagram of a communication method according to an aspect of the present disclosure.

### DESCRIPTION

The communication system according to the present implementation includes a base station device (a transmission device, a cell, a transmitting point, a transmitting antenna group, a transmitting antenna port group, a component carrier, an eNodeB, a transmission point, a transceiver point, a transmission panel, an access point) and a terminal device (a terminal, a mobile terminal, a receiving point, a receiving terminal, a receiving device, a receiving antenna group, a receiving antenna port group, user equipment UE, a receiving point, a receiving panel, a station). Additionally, a base station device connected to a terminal device (for establishing a wireless link) is called a serving cell.

The base station device and the terminal device in the present implementation are also generally referred to as a communications device. In the present implementation, at least a part of the communication method performed by the base station device can also be performed by the terminal device. Similarly, in the present implementation, at least a part of the communication method performed by the terminal device can also be performed by the base station device.

The base station device and the terminal device according to the present implementation may communicate in a frequency band that requires permission (license band) and/or communicate in a frequency band that does not require permission (unlicensed band).

In the present implementation, "X/Y" includes the meaning of "X or Y." In the present implementation, "X/Y" includes the meaning of "X and Y." In the present implementation, "X/Y" includes the meaning of "X and/or Y."

### 1. First Implementation

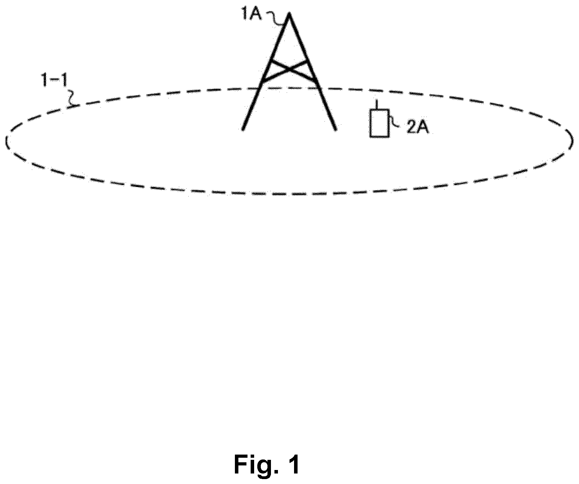

Figure 1 is a schematic diagram of a communication system according to an aspect of the present disclosure. As illustrated in Figure 1, the communication system according to the present implementation includes a base station device 1A and a terminal device 2A. Furthermore, a coverage area 1-1 is an area (communication area) where the base station device 1A can be connected to the terminal device. Additionally, the base station device 1A may be referred to as a base station device. The terminal device 2A may also be referred to as a terminal device.

In Figure 1, the following uplink physical channel may be used in the uplink wireless communication from the terminal device 2A to the base station device 1A. The uplink physical channels are used for transmitting information output from higher layers.
- PUCCH (Physical Uplink Control Channel)
- PUSCH (Physical Uplink Shared Channel)
- PRACH (Physical Random Access Channel)

PUCCH may be used for transmitting uplink control information (UCI). Herein, the UCI may include a positive acknowledgement (ACK) for downlink data (downlink transport block, Downlink-Shared Channel, DL-SCH), or a negative acknowledgement (NACK), in short, ACK/NACK. The ACK/NACK for downlink data may be referred to as HARQ-ACK, or HARQ feedback.

Furthermore, the UCI may include channel state information (CSI) for downlink. Moreover, the UCI may include a scheduling request (SR) for requesting resources of uplink-shared channel (UL-SCH). The CSI may be equivalent to: a rank indicator (RI) for specifying a preferable spatial multiplexing number, a precoding matrix indicator (PMI) for specifying a preferable precoder, a channel quality indicator (CQI) for specifying a preferable transmission rage, a CSI resource signal (CSI-RS) resource indicator (CRI) for specifying preferable CSI-RS resources, etc.

The CQI (herein referred to as CQI value) may be set as a preferred modulation scheme (for example, QPSK, 16QAM, 64 QAM, 256 QAM, etc.) and a coding rate in a predetermined band (details are subsequently provided). The CQI value may be set as an index (CQI Index) determined by the modulation scheme and the coding rate. The CQI value may be predetermined by the system.

The CRI refers to a CSI-RS resource from a plurality of CSI-RS resources with preferred received power/ received quality.

It is noted that the RI and the PMI may be predetermined by the system. The RI and the PMI may be set as indices for determining spatial multiplexing number or precoding matrix information. It is further noted that part or all of the CQI value, PMI value, RI value and CRI value may be referred to as CSI value.

PUSCH may be used in transmitting uplink data (uplink transport block, UL-SCH). Furthermore, PUSCH may also be used for transmitting ACK/NACK and/or the CSI with uplink data. Furthermore, PUSCH may also be used for transmitting only the UCI.

Additionally, PUSCH may be used to transmit RRC message. The RRC message is the information/signal proceed in the radio resource control (RRC) layer. Furthermore, PUSCH may be used to transmit MAC control element (CE). Herein, the MAC CE is the information/signal processed in the medium access control (MAC) layer.

For example, power headroom may be included in the MAC CE and reported via PUSCH. This means that, the fields of MAC CE may also be used to indicate a level of power headroom.

PRACH may be used to transmit a random access preamble.

Furthermore, in uplink wireless communication, the uplink reference signal (UL RS) may be used as an uplink physical signal. The uplink physical signal may not be used for transmitting information output from a higher layer, but is used by the physical layer. Herein, the uplink reference signal may include a demodulation reference signal (DMRS), a sounding reference signal (SRS), and a phase-tracking reference signal (PT-RS).

The DMRS may be related to the transmission of PUSCH or PUCCH. For example, the base station device 1A uses the DMRS to perform transmission path correction of PUSCH or PUCCH. For example, the base station device 1A uses the SRS to determine an uplink channel state. Furthermore, the SRS may be used for uplink observation (sounding). Furthermore, the PT-RS may be used to compensate for phase noise. It is noted that the DMRS of uplink may also be referred to as an uplink DMRS.

In Figure 1, the following downlink physical channel may be used in the uplink wireless communication from the base station device 1A to the terminal device 2A. The downlink physical channels are used for transmitting information output from higher layers.
- PBCH (Physical Broadcast Channel)
- PCFICH (Physical Control Format Indicator Channel)
- PHICH (Physical Hybrid automatic repeat request Indicator Channel; HARQ Indicator Channel)
- PDCCH (Physical Downlink Control Channel)
- EPDCCH (Enhanced Physical Downlink Control Channel)
- PDSCH (Physical Downlink Shared Channel

PBCH may be used to broadcast a master information block (MIB, Broadcast Channel: BCH) universally used by the terminal devices. PCFICH may be used to transmit information indicating areas used for PDCCH transmission (for example, the number of orthogonal frequency division multiplexing (OFDM) symbols). It is noted that the MIB may be referred to as the minimum system information.

PHICH may be used to transmit ACK/NACK for uplink data (transport block, codeword) that is received by the base station device 1A. That is, PHICH is used to transmit a HARQ indicator (HARQ feedback) indicating ACK/NACK for uplink data. Additionally, ACK/NACK may be referred to as HARQ-ACK. The terminal device 2A notifies the higher layer of the received ACK/NACK. The ACK/NACK may include ACK indicating that the data has been correctly received, NACK indicating that the data has not been correctly received, and DTX indicating that there was no corresponding data. Furthermore, if there is no PHICH for the uplink data, the terminal device 2A notifies the higher layer with an ACK.

PDCCH and EPDCCH may be used to transmit downlink control information (DCI). Herein, various types of DCI format are defined for transmission of downlink control information. That is, the field for the downlink control information is defined as the DCI format and mapped to information bits.

For example, DCI format 1A may be defined for scheduling a PDSCH (transmission of one downlink transport block) in a cell as the DCI format of the downlink.

For example, the DCI format for the downlink includes: information relating to PDSCH resource assignment, information relating to modulation and coding scheme (MCS) for PDSCH, and downlink control information such as a TPC command for PUCCH. Herein, the DCI format for the downlink may be referred to as a downlink grant (or downlink assignment).

Furthermore, for example, DCI format 0 may be defined for scheduling a PUSCH (transmission of one uplink transport block) in a cell as the DCI format for the uplink.

For example, the DCI format for the uplink includes: information relating to PUSCH resource assignment, information relating to MCS for PUSCH, and uplink control information such as a TPC command for PUSCH. The DCI format for the uplink may be referred to as an uplink grant (or uplink assignment).

Additionally, the DCI format for the uplink may be used to request downlink channel state information (CSI; also be referred to as received quality information).

Moreover, the DCI format for the uplink may be used to indicate the setting of the uplink resource that maps the channel state information report (CSI feedback report), which the terminal device feeds back to the base station device. For example, the CSI feedback report may be used to indicate periodical reporting of an uplink resource setting of the channel state information (Periodic CSI). The CSI feedback report may be used to periodically report a mode setting of the channel state information (CSI report mode).

For example, the CSI feedback report may be used to indicate non-periodical reporting of an uplink resource setting of the channel state information (Aperiodic CSI). The CSI feedback report may be used to non-periodically report a mode setting of the channel state information (CSI report mode).

For example, the CSI feedback report may be used to indicate semi-persistent reporting of an uplink resource setting of the channel state information (Semi-persistent CSI). The CSI feedback report may be used to semi-persistently report a mode setting of the channel state information (CSI report mode).

Furthermore, the DCI format for the uplink may be used to indicate a setting for the type of CSI feedback report that the terminal device feeds back to the base station device. The types of the CSI feedback report include a wideband CSI (for example, Wideband CQI), a narrowband CSI (for example, Subband CQI) and others.

When the PDSCH resource is scheduled using the downlink assignment, the terminal device receives the downlink data on the scheduled PDSCH. Furthermore, when a PUSCH resource is scheduled using an uplink grant, the terminal device transmits uplink data and/or uplink control information on the scheduled PUSCH.

PDSCH may be used for transmitting downlink data (downlink transport block, DL-SCH). The PDSCH is used for transmitting a system information block type 1 message. The system information block type 1 message is cell-specific (cell-specific) information.

Furthermore, PDSCH may be used for transmitting a system information message. The system information message includes a system information block X other than the system information block type 1. The system information message is cell-specific (cell-specific) information.

Furthermore, PDSCH may be used for transmitting an RRC message. Herein, the RRC message transmitted from the base station device may be universal to a plurality of terminal devices in the cell. Furthermore, the RRC message transmitted from the base station device 1A may be a message dedicated to a terminal device 2A (also referred to as dedicated signaling). That is, using the message dedicated to a terminal device to transmit user device-specific (user device-specific) information. Furthermore, PDSCH may be used for transmitting MAC CE.

Herein, the RRC message and/or the MAC CE may be referred to as higher layer signaling.

Furthermore, the PDSCH may be used to request downlink channel state information. Furthermore, the PDSCH may be used to transmit an uplink resource that maps a channel state information report (CSI feedback report) that the terminal device feeds back to the base station device. For example, the CSI feedback report may be used to indicate periodical reporting of an uplink resource setting of the channel state information (Periodic CSI). The CSI feedback report may be used to periodically report a mode setting of the channel state information (CSI report mode).

The types of downlink channel state information reports may include broadband CSI (for example, Wideband CSI), narrowband CSI (for example, Subband CSI) and others. Broadband CSI calculates channel state information for a system band of a cell. The narrowband CSI divides a system band into predetermined units, and calculates channel state information for the division.

In downlink wireless communication, a synchronization signal (SS) and a downlink reference signal (DL RS) may be used as downlink physical signals. The downlink physical signal may not be used for transmitting information output from the higher layer, but used by the physical layer. It is noted that the synchronization signal may include a primary synchronization signal (PSS) and a secondary synchronization signal (SSS).

The synchronization signal may be used by the terminal device to synchronize the downlink frequency domain and the time domain. The synchronization signal may be used to measure received power, received quality, or a signal-to-interference and noise power ratio (SINR). It is noted that the received power measured with the synchronization signal may be referred to as synchronization signal-reference signal received power (SS-RSRP), the received quality measured with the synchronization signal may be referred to as reference signal received quality (SS-RSRQ), and the SINR measured with the synchronization signal may be referred to as SS-RSRP. It is noted that note that SS-RSRQ is the ratio of SS-RSRP to RSSI. Received signal strength indicator (RSSI) is the average of the total received power in an observing period. Additionally, the synchronization signal/downlink reference signal may be used by the terminal device to perform channel correction of the downlink physical channel. For example, the synchronization signal/downlink reference signal is used by the terminal device to calculate downlink channel state information. Furthermore, the RSRP of layer 1 measured by a synchronization signal or CSI-RS may be referred to as LI-RSRP.

Herein, the downlink reference signal includes a cell-specific reference signal (CRS), demodulation reference signal (DMRS), non-zero power channel state information-reference signal (NZP CSI-RS), zero power channel state information-reference signal (ZP CSI-RS), PT-RS, tracking reference signal (TRS). It is noted that the DMRS for downlink may be referred to as a downlink DMRS. It is noted that, in the subsequent implementations, when only CSI-RS is referred, it includes NZP CSI-RS and/or ZP CSI-RS.

The CRS may be transmitted in the entire band of the subframe and may be used for demodulating PBCH/PDCCH/PHICH/PCFICH/PDSCH. The DMRS may be transmitted in the subframe and the band used for transmitting the PDSCH/PBCH/PDCCH/EPDCCH associated with the DMRS, and may be used for demodulating the PDSCH/PBCH/PDCCH/EPDCCH associated with the DMRS.

The resources of NZP CSI-RS may be set by the base station device 1A. For example, the terminal device 2A performs signal measurement (channel measurement) using NZP CSI-RS. Furthermore, the NZP CSI-RS may be used for beam scan that searches for a preferable beam direction, beam recovery for recovering when received power/received quality in the beam direction is deteriorated, and others alike. The ZP CSI-RS resources may be set by the base station device 1A. Base station device 1A transmits ZP CSI-RS with zero output. For example, the terminal device 2A measures the interference in the resources corresponding to the ZP CSI-RS.

Additionally, CSI-RS may be used for measuring received power, received quality, or SINR. The received power measured by CSI-RS may be referred to as CSI-RSRP, the received quality measured by CSI-RS may be referred to as CSI-RSRQ, and the SINR measured by CSI-RS may be referred to as CSI-SINR. It is noted that CSI-RSRQ is a ratio of CSI-RSRP and RSSI.

The multimedia broadcast multicast service single frequency network (MBSFN) RS may be transmitted in the entire band of the subframe used for transmitting the PMCH. The MBSFN RS may be used for demodulating PMCH. The PMCH is transmitted on an antenna port used for transmitting the MBSFN RS.

Herein, the downlink physical channel and the downlink physical signal may be collectively referred to as a downlink signal. Additionally, the uplink physical channel and the uplink physical signal may be collectively referred to as an uplink signal. Furthermore, the downlink physical channel and the uplink physical channel may be collectively referred to as a physical channel. Furthermore, the downlink physical signal and the uplink physical signal may be collectively referred to as a physical signal.

Furthermore, BCH, UL-SCH and DL-SCH are transport channels. The channels used in the MAC layer are referred to as transport channels. Furthermore, the unit of the transport channel used in the MAC layer is referred to as a transport block (TB) or a MAC protocol data unit (PDU). The transport block is a unit of data that the MAC layer delivers to the physical layer. In the physical layer, transport blocks are mapped to codewords, and each codeword is coded or processed accordingly.

Furthermore, for a terminal device that supports carrier aggregation (CA), the base station device may communicate by integrating a plurality of component carriers (CCs) to thereby perform wider band transmission. In the carrier aggregation, one primary cell (PCell) and one or more secondary cells (SCell) may be set as a set of serving cells.

Furthermore, in dual connectivity (DC), a master cell group (MCG) and a secondary cell group (SCG) may be set as serving cell groups. The MCG includes a PCell and, optionally, one or more SCells. The SCG includes a primary SCell (PSCell) and, optionally, one or more SCells.

The base station device may communicate using a radio frame. The radio frame is composed of a plurality of subframes (sub-intervals). When expressing the frame length in time, for example, the radio frame length may be set to 10 milliseconds (ms) and the subframe length may be set to 1 ms. In this example, the radio frame is composed of ten subframes.

Furthermore, each timeslot is composed of 14 OFDM symbols. Since the OFDM symbol length may change according to the subcarrier spacing, therefore, the timeslot length may be substituted by the subcarrier spacing. Furthermore, a mini-timeslot is composed of OFDM symbols that is fewer than timeslot. A timeslot/mini-timeslot may be a scheduling unit. It is noted that the terminal device may know the timeslot-based scheduling/mini-timeslot-based scheduling based on the position (configuration) of the first downlink DMRS. In timeslot-based scheduling, the first downlink DMRS is configured in the third or fourth symbol of a timeslot. In the mini-timeslot-based scheduling, the first downlink DMRS is configured in the first symbol of the scheduled data (resources, PDSCH).

Furthermore, a resource block may be defined by 12 consecutive subcarriers. Furthermore, a resource element may be defined by a frequency domain index (for example, a subcarrier index) and a time domain index (for example, an OFDM symbol index). Resource elements may be classified as uplink resource elements, downlink elements, flexible resource elements, and reserved resource elements. In the reserved resource element, the terminal device does not transmit an uplink signal and does not receive a downlink signal.

Also, multiple subcarrier spacing (SCS) is supported. For example, the SCS may be 15/30/60/120/240/480 kHz.

The base station device/terminal device may communicate in a licensed band or an unlicensed band. The base station device/terminal device may communicate via at least one SCell that operates in the unlicensed band with carrier aggregation and the license band being PCell. Furthermore, the base station device/terminal device may perform dual connectivity that the master cell group communicates on the license band and the secondary cell group communicates on the unlicensed band. Furthermore, the base station device/terminal device may communicate only with the PCell in the unlicensed band. Furthermore, the base station device/terminal device may communicate with CA or DC only in the unlicensed band. It is noted that a situation may be referred to as licensed-assisted access (LAA) when the licensed band is a PCell and the cells of the unlicensed band (SCell, PSCell) are assisted and communicated by, for example, CA or DC. Furthermore, the communication between the base station device and the terminal device using only the unlicensed band may be referred to as unlicensed-standalone access (ULSA). Furthermore, the communication between the base station device and the terminal device using only the license band may be referred to as licensed access (LA).

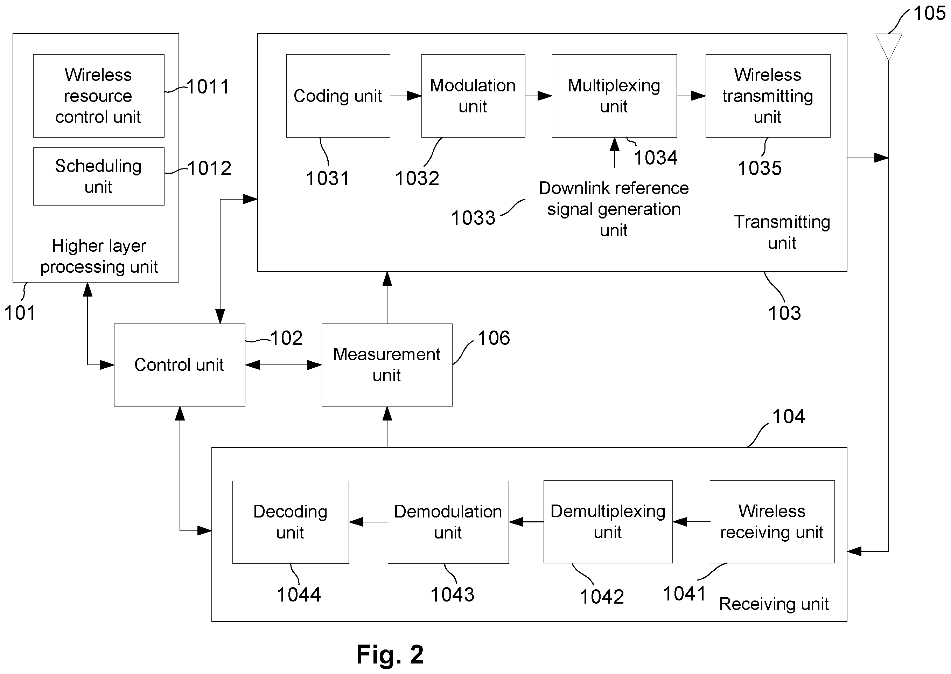

Figure 2 is a block diagram of the base station device according to the present implementation. As shown in Figure 2, the base station device includes: a higher layer processing unit (higher layer processing step) 101, a control unit (controlling step) 102, a transmitting unit (transmitting step) 103, a receiving unit (receiving step) 104, a transmitting/receiving antenna 105, and a measurement unit (measuring step) 106. Furthermore, the higher layer processing unit 101 includes a wireless resource control unit (wireless resource controlling step) 1011 and a scheduling unit (scheduling step) 1012. Furthermore, the transmitting unit 103 includes: a coding unit (coding step) 1031, a modulation unit (modulating step) 1032, a downlink reference signal generation unit (downlink reference signal generating step) 1033, a multiplexing unit (multiplexing step) 1034, and wireless transmission unit (wireless transmitting step) 1035. The receiving unit 104 includes: a wireless receiving unit (wireless receiving step) 1041, a demultiplexing unit (demultiplexing step) 1042, a demodulating unit (demodulating step) 1043, and a decoding unit (decoding step) 1044.

The higher layer processing unit 101 includes processing of a medium access control (MAC) layer, a packet data convergence protocol (PDCP) layer, a radio link control (RLC) layer, and a radio resource control (RRC) layer. Furthermore, the higher layer processing unit 101 generates information required for controlling the transmitting unit 103 and the receiving unit 104, and outputs the information to the control unit 102.

The higher layer processing unit 101 receives information about a terminal device, such as a terminal device capability (UE capability), from the terminal device. In other words, the terminal device transmits its capability to the base station device with a higher layer signal.

It is noted that, in the subsequent description, information relating to a terminal device may include information indicating whether the terminal device supports a predetermined function, or information indicating that the terminal device has completed introduction and testing of the predetermined function. It is noted that, in the subsequent description, whether a predetermined function is supported includes whether the introduction and testing of the predetermined function have been completed.

For example, when the terminal device supports a predetermined function, the terminal device transmits information (parameter) indicating whether the terminal device supports the predetermined function. When the terminal device does not support the predetermined function, the terminal device does not transmit information (parameter) indicating whether the terminal device supports the predetermined function. That is, whether to support the predetermined function is notified by transmitting information (parameter) indicating whether to support the predetermined function. It is noted that the information (parameter) indicating whether or not a predetermined function is supported may be notified using one bit of 1 or 0.

The wireless resource control unit 1011 generates or obtain from a higher node downlink data (transport block), system information, a RRC message, a MAC CE, and others of the PDSCH configured for downlink. The wireless resource control unit 1011 outputs downlink data to the transmitting unit 103 and outputs other information to the control unit 102. Furthermore, the wireless resource control unit 1011 manages various setting information of the terminal device.

The scheduling unit 1012 determines the frequencies and subframes assigned to the physical channels (PDSCH and PUSCH), the coding rates and the modulation schemes (or MCS) of the physical channels (PDSCH and PUSCH), the transmitting power, and others. The scheduling unit 1012 outputs the determined information to the control unit 102.

The scheduling unit 1012 generates information used for scheduling the physical channels (PDSCH and PUSCH) based on scheduling results. The scheduling unit 1012 outputs the generated information to the control unit 102.

The control unit 102 generates a control signal for controlling the transmitting unit 103 and the receiving unit 104 based on information input from the higher layer processing unit 101. The control unit 102 generates downlink control information based on the information input from the higher layer processing unit 101, and outputs the generated downlink control information to the transmitting unit 103.

The transmitting unit 103 generates a downlink reference signal according to the control signal input from the control unit 102; encodes and modulates the HARQ indicator, downlink control information, and downlink data input from the higher layer processing unit 101; multiplexes the PHICH, PDCCH, EPDCCH, PDSCH and downlink reference signal, and transmits the signal to the terminal device 2A via the transmitting/receiving antenna 105.

The coding unit 1031 uses block coding, convolutional coding, Turbo coding, low density parity check (LDPC) coding, Polar coding and others as predetermined coding methods, and performs coding to the HARQ indicator, downlink control information, and downlink data input from the higher layer processing unit 101, or uses a coding method determined by the wireless resource control unit 1011. The modulation unit 1032 uses binary phase shift keying (BPSK), quadrature phase shift keying (QPSK), 16 quadrature amplitude modulation (QAM), 64QAM, 256QAM, or the like as predetermined scheme or uses a modulation scheme determined by the wireless resource control unit 1011, and performs modulating to the code bits input from the coding unit 1031.

The downlink reference signal generation unit 1033 generates a sequence as the downlink reference signal. The sequence is obtained from a predetermined rule based on a physical cell identifier (PCI, cell ID) used to identify the base station device 1A or the like, and the sequence is known to the terminal device 2A.

The multiplexing unit 1034 multiplexes the modulated modulation symbol of each channel, the generated downlink reference signal, and the downlink control information. That is, the multiplexing unit 1034 configures the modulated modulation symbol of each channel, the generated downlink reference signal, and the downlink control information in a resource element.

The wireless transmission unit 1035 generates an OFDM symbol by performing an inverse fast Fourier transform (IFFT) on the multiplexed modulation symbols and the like, and adds a cyclic prefix (CP) to the OFDM symbol to generate a digital signal of a baseband. The digital signal of a baseband is converted into an analog signal, undesirable frequency component is removed by filtering, up-converted to the transmission frequency, power-amplified, and output to the transmitting/receiving antenna 105 for transmission. The transmission power at this time is based on information set via the control unit 102.

The receiving unit 104 separates, demodulates, and decodes the received signal received from terminal device 2A via the transmitting/receiving antenna 105 according to the control signal input from control unit 102, and outputs the decoded information to the higher layer processing unit 101. It is noted that the receiving unit 104 also includes a function (step) of performing carrier-sense.

The wireless receiving unit 1041 converts an uplink signal received via the transmitting/receiving antenna 105 into a baseband signal by down-conversion, removes undesirable frequency components, controls an amplifying level by suitably maintaining the signal level, performs quadrature demodulation based on the in-phase component and the quadrature component of the received signal, and converts the quadrature demodulated analog signal to a digital signal.

The wireless receiving unit 1041 removes a portion corresponding to the CP from the converted digital signal. The wireless receiving unit 1041 performs fast Fourier transform (FFT) to the signal that has the CP removed, extracts a signal in the frequency domain, and outputs the signal to the demultiplexing unit 1042.

The demultiplexing unit 1042 separates the signal input from the wireless receiving unit 1041 into signals such as PUCCH, PUSCH, and uplink reference signals. It is noted that the separation is predetermined by the base station device 1A via the wireless resource control unit 1011, and is performed based on the wireless resource assignment information included in the uplink grant notified to each terminal device 2A.

Furthermore, the demultiplexing unit 1042 performs compensation for the propagation paths of PUCCH and PUSCH. Furthermore, the demultiplexing unit 1042 divides an uplink reference signal.

The demodulation unit 1043 performs an inverse discrete Fourier transform (IDFT) on the PUSCH, obtains modulation symbols, and performs demodulation to the received signal on each of the PUCCH and PUSCH modulation symbols using BPSK, QPSK, 16QAM, 64QAM, 256QAM, or the other predetermined demodulation schemes, or modulation schemes that the device itself notified to the terminal device 2A via an uplink grant in advance.

The decoding unit 1044 performs decoding to the demodulated coded bits of the PUCCH and the PUSCH with a coding rate of a predetermined coding scheme or the coding rate that the device itself notified the terminal device 2A via an uplink grant in advance, and outputs the decoded uplink data and uplink control information to the higher layer processing unit 101. When retransmitting the PUSCH, the decoding unit 1044 performs decoding using the coded bits stored in the HARQ buffer input from the higher layer processing unit 101 and the demodulated coded bits.

The measuring unit 106 observes the received signal and obtains various measurement values such as RSRP/RSRQ/RSSI. Furthermore, the measuring unit 106 obtains received power, received quality, and a preferred SRS resource index based on the SRS transmitted from the terminal device.

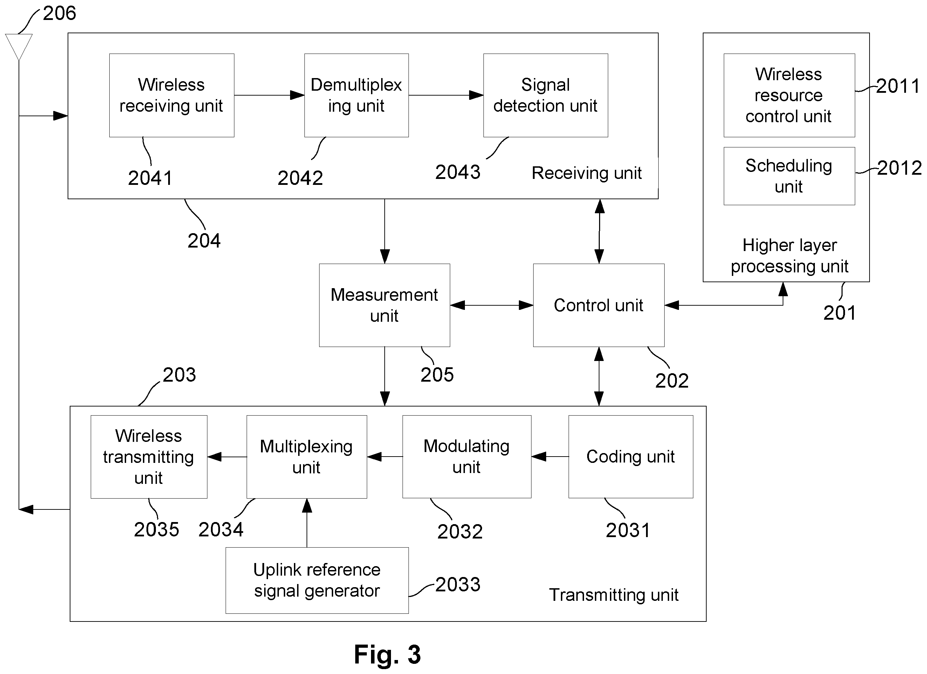

Figure 3 is a block diagram of a terminal device according to an aspect of the present disclosure. As shown in Figure 3, the terminal device includes: a higher layer processing unit (higher layer processing step) 201, a control unit (controlling step) 202, a transmitting unit (transmitting step) 203, a receiving unit (receiving step) 204, and a measuring unit (measuring step) 205, and a transmitting/receiving antenna 206. Furthermore, the higher layer processing unit 201 includes a wireless resource control unit (wireless resource controlling step) 2011 and a scheduling information interpreting unit (scheduling information interpretation step) 2012. Furthermore, the transmitting unit 203 includes: a coding unit (coding step) 2031, a modulation section (modulating step) 2032, an uplink reference signal generation unit (uplink reference signal generating step) 2033, a multiplexing unit (multiplexing step) 2034, a wireless transmission unit (wireless transmitting step) 2035. The receiving unit 204 includes: a wireless receiving unit (wireless receiving step) 2041, a demultiplexing unit (demultiplexing step) 2042, and a signal detecting unit (signal detecting step) 2043.

The higher layer processing unit 201 outputs the uplink data (transport block) generated by user operation or the like to the transmitting unit 203. The higher layer processing unit 201 includes processing of a medium access control (MAC) layer, a packet data integration protocol (PDCP) layer, radio link control (RLC) layer, and radio resource control (RRC) layers.

The higher layer processing unit 201 outputs information indicating the function of the terminal device supported by the terminal device itself to the transmitting unit 203.

The wireless resource control unit 2011 manages various setting information of the terminal device. Furthermore, the wireless resource control unit 2011 generates information assigned to each uplink channel and outputs the information to the transmitting unit 203.

The wireless resource control unit 2011 obtains setting information transmitted from the base station device and outputs the setting information to the control unit 202.

The scheduling information interpreting unit 2012 interprets the downlink control information received via the receiving unit 204 and determines scheduling information. Furthermore, the scheduling information interpreting unit 2012 generates control information for controlling the receiving unit 204 and the transmitting unit 203 based on the scheduling information, and outputs the generated control information to the control unit 202.

The control unit 202 based on the information input from the higher layer processing unit 201 generates a control signal for controlling the receiving unit 204, the measuring unit 205, and the transmitting unit 203. The control unit 202 outputs the generated control signal to the receiving unit 204, the measuring unit 205, and the transmitting unit 203 to control the receiving unit 204 and the transmitting unit 203.

The control unit 202 controls the transmitting unit 203 with the method that the CSI/RSRP/RSRQ/RSSI generated by the measuring unit 205 transmits to the base station device.

The receiving unit 204 separates, demodulates, and decodes the received signal received from the base station device via the transmitting/receiving antenna 206 according to the control signal input from control unit 202, and outputs the decoded information to the higher layer processing unit 201. It is noted that the receiving unit 204 also includes a function (step) of performing carrier-sense.

The wireless receiving unit 2041 converts a downlink signal received via the transmitting/receiving antenna 206 into a baseband signal by down-conversion, removes undesirable frequency components, controls an amplifying level by suitably maintaining the signal level, performs quadrature demodulation based on the in-phase component and the quadrature component of the received signal, and converts the quadrature demodulated analog signal to a digital signal.

Furthermore, the wireless receiving unit 2041 removes a portion corresponding to the CP from the converted digital signal, performs fast Fourier transform to the signal that has the CP removed, and extracts a signal in the frequency domain.

The demultiplexing unit 2042 separates the extracted signal into a PHICH, a PDCCH, an EPDCCH, a PDSCH, and a downlink reference signal, respectively. Furthermore, the demultiplexing unit 2042 compensates the PHICH, the PDCCH, and the EPDCCH channels based on the channel estimation value of the expected signal obtained from the channel measurement, detects downlink control information, and output to the control unit 202. Furthermore, the control unit 202 outputs the channel estimation values of the PDSCH and the expected signal to the signal detection unit 2043.

The signal detection unit 2043 performs signal detection using the PDSCH and the channel estimation value, and outputs to the higher layer processing unit 201.

The measuring unit 205 performs various measurements such as CSI measurements, radio resource management (RRM) measurements, radio link monitoring (RLM) measurements, to obtain CSI/RSRP/RSRQ/RSSI and the like.

The transmitting unit 203 generates an uplink reference signal according to the control signal input from the control unit 202, codes and modulates the uplink data (transport block) input from the higher layer processing unit 201, performs multiplexing to PUCCH, PUSCH and the generated uplink reference signal, and transmits to the base station device via the transmitting/ /receiving antenna 206.

The coding unit 2031 performs coding, such as convolution coding, block coding, Turbo coding, LDPC coding, and Polar coding, to the uplink control information or the uplink data input from the higher layer processing unit 201.

The modulating unit 2032 modulates uses BPSK, QPSK, 16QAM, 64QAM, or the like modulation schemes as notified by downlink control information or uses a modulation scheme predetermined for each channel, and performs modulating to the code bits input from the coding unit 2031.

The uplink reference signal generation unit 2033 generate a sequence obtained via the predetermined rule (formula) based on a physical cell identity (may be referred to as PCI, Cell ID, or the like) for identifying the base station device, a bandwidth for assigning the uplink reference signal, cyclic shift notified via an uplink grant, parameter value for generating the DMRS sequence, and the like.

The multiplexing unit 2034 multiplexes the PUCCH and PUSCH signals and the generated uplink reference signal for each transmitting antenna port. That is, the multiplexing unit 2034 assigns the PUCCH and PUSCH signals and the generated uplink reference signal in the resource element for each transmitting antenna port.

The wireless transmitting unit 2035 performs an inverse fast Fourier transform (Inverse Fast Fourier Transform: IFFT) to the multiplexed signal to performs OFDM modulation, generates an OFDMA symbol, adds a CP to the generated OFDMA symbol to generate a baseband digital signal, converts the baseband digital signal to an analog signal, removes undesirable frequency components, converts to a carrier frequency by up-conversion, amplifies power, outputs and transmits to transmitting/receiving antenna 206.

It is noted that the terminal device may perform modulation not limited to the OFDMA system, but also the SC-FDMA system.

When ultra-high-capacity communication such as ultra-high-definition video transmission is required, it is desirable to effectively utilize the high frequency band for ultra-wideband transmission. Transmission in the high frequency band, it may be required to compensate for path loss, and beamforming may become important. Furthermore, in an environment that exists a plurality of terminal devices in a confined area and ultra-large capacity communication is required for each terminal device, it is effective to configure the base stations to an ultra-dense network. However, when base stations are configured to high density, it may significantly improves the signal-to-noise power ratio (SNR), strong interference due to beamforming may occur. Therefore, in order to realize ultra-large capacity communication for all terminal devices in the confined area, interference control (avoidance, suppression, removal) of beamforming and/or coordinating communication of a plurality of base stations need to be considered.

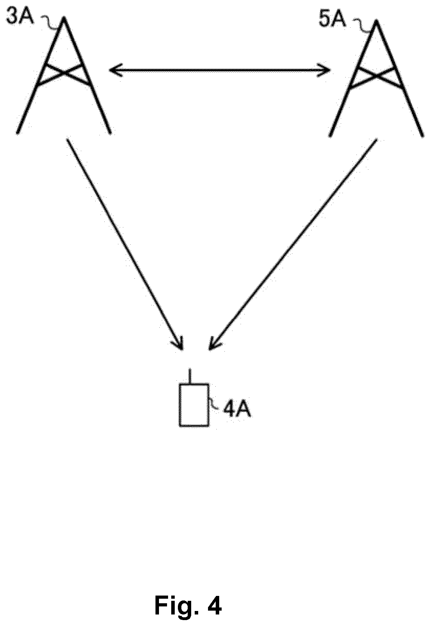

Figure 4 is a schematic diagram of a communication system according to an aspect of the present disclosure. The communication system as shown in Figure 4 includes: a base station device 3A, a base station device 5A, and a terminal device 4A. The terminal device 4A may set the base station device 3A and/or the base station device 5A as a serving cell. Furthermore, when the base station device 3A or the base station device 5A includes a plurality of antennas, the plurality of antennas may be divided into a plurality of sub-arrays (panels, sub-panels), and may apply transmitting/receiving beamforming according to each sub-array. In this example, each sub-array may include a communications device. Unless otherwise specified, the configuration of the communications device is the same as the configuration of the base station device as shown in Figure 2. Furthermore, when the terminal device 4A includes a plurality of antennas, the plurality of antennas may be divided into a plurality of sub-arrays (panels, sub-panels), and may apply different transmitting/receiving beamforming according to each sub-array application. Each sub-array may include a communications device. Unless otherwise specified, the configuration of the communications device is the same as the configuration of the terminal device as shown in Figure 3. It is noted that the base station device 3A and the base station device 5A may be referred to as base station devices. It is noted that the terminal device 4A may be referred to as a terminal device.

Synchronization signals are used to determine a preferred transmitting beam for the base station device and a preferred receiving beam for the terminal device. The base station device transmits a synchronization signal block (SS block, SSB) composed of PSS, PBCH, and SSS. It is noted that, within a synchronization signal block burst set cycle defined by the base station device, one or more synchronization signal blocks are transmitted in the time domain, and each synchronization signal block is set with a time index. Similar to the terminal device considering the synchronization signal block having the same time index within the synchronization signal block burst set period as a delay spread, a Doppler spread, a Doppler shift, an average gain, an average delay, a spatial receiving parameter and/or a spatial transmitting parameter, it may be considered, in certain way, as transmitting from the same location (quasi co-located, QCL). It is noted that the spatial receiving parameter may be, for example, a spatial correlation of a channel, an angle of arrival (Angle of Arrival), or the like. Furthermore, the spatial transmitting parameter may be, for example, a spatial correlation of a channel, a transmitting angle (Angle of Departure), or the like. That is, the terminal device may assume that, within the synchronization signal block burst set period, the synchronization signal blocks having the same time index are transmitted by the same transmitting beam, and the synchronization signal blocks having different time indices are transmitted by different beams. Therefore, if the terminal device reports information indicating a time index of a preferable synchronization signal block within the synchronization signal block burst set period to the base station device, the base station device may know that the transmitting beam suitable for the terminal device. Furthermore, the terminal device may obtain the receiving beam suitable for the terminal device by using a synchronization signal block having the same time index in different synchronization signal block burst set periods. Therefore, the terminal device may establish associations between the time index of the synchronization signal block and the receiving beam direction and/or the sub-array. It is noted that when the terminal device includes a plurality of sub-arrays, the terminal device may use different sub-arrays when connecting to different cells.

Furthermore, to ensure the transmitting beam of a suitable base station device and the receiving beam of a suitable terminal device may use CSI-RS, the base station device may set the setting information using the signal of the higher layer. For example, the setting information includes a part or all of the resource setting and the report setting.

The resource setting includes a resource setting ID, a resource setting type and/or one or more of CSI-RS resource set settings. The resource setting ID is used for determining a setting of the resource. The resource setting type indicates the operation of the resource setting in the time domain. Specifically, the resource setting type indicates an aperiodic transmission of the CSI-RS, a periodic transmission of the CSI-RS, or a semi-persistent transmission of the CSI-RS. The CSI-RS resource set setting includes a CSI-RS resource set setting ID and/or one or more CSI-RS resource settings. The CSI-RS resource set setting ID is used to determine the CSI-RS resource set setting. The CSI-RS resource setting includes a CSI-RS resource setting ID, a resource setting type, the number of antenna ports, CSI-RS resource mapping, and a part or all of the power offset between the CSI-RS and PDSCH. The CSI-RS resource setting ID is used to determine the CSI-RS resource setting, and the CSI-RS resource is associated with the CSI-RS resource setting ID. The CSI-RS resource mapping indicates a resource element (OFDM symbol, subcarrier) in the CSI-RS in the assigned timeslot.

The resource setting is used for CSI measurement or RRM measurement. The terminal device receives the CSI-RS with the configured resource, calculates the CSI from the CSI-RS, and reports the CSI to the base station device. Furthermore, when the CSI-RS resource set setting includes a plurality of CSI-RS resource settings, the terminal device receives the CSI-RS with the same receiving beam with each CSI-RS resource and calculates the CRI. For example, when the CSI-RS resource set setting includes K (K is an integer larger or equal to 2) number of CSI-RS resource settings, the CRI indicates N number of preferable CSI-RS resources of the K number of CSI-RS resources. In this example, N is a positive integer less than K. Furthermore, when the CRI indicates a plurality of CSI-RS resources, in order to indicate which CSI-RS resource is of a good quality, the terminal device may report the CSI-RSRP measured on each CSI-RS resource to the base station device. If the base station device performs beamforming (precoding) to the CSI-RS in different beam directions with the plurality of configured CSI-RS resources and transmits the CSI-RS, the base station device may know the transmitting beam direction of the base station suitable for the terminal device based on the CRI reported from the terminal device. On the other hand, the receiving beam direction of the preferable terminal device may be determined using the CSI-RS resources that are secured for the transmitting beam of the base station device. For example, the base station device, for a CSI-RS resource, transmits information indicating whether the transmitting beam of the base station device is secured and/or the period during which the transmitting beam is secured. The terminal device may obtain a preferable receiving beam direction from the CSI-RS received in different receiving beam directions with the CSI-RS resources secured for the transmitting beam. It is noted that the terminal device may report the CSI-RSRP after determining a preferable receiving beam direction. It is noted that when the terminal device has a plurality of sub-arrays, the terminal device may select a preferable sub-array when a preferable receiving beam direction has been obtained. It is noted that that the preferable receiving beam direction of the terminal device may be associated with the CRI. Furthermore, when the terminal device reports a plurality of CRIs, the base station device may secure transmitting beams on the CSI-RS resources associated with each CRI. Wherein, the terminal device may determine a preferable receiving beam direction for each CRI. For example, the base station device may establish associations with a downlink signal/channel and a CRI for transmission. Wherein, the terminal device has to receive with the receiving beam that is associated with the CRI. Furthermore, different base station devices may transmit CSI-RSs in a plurality of configured CSI-RS resources. In this situation, the network side may know from the CRI that which base station device is of a good communication quality. Furthermore, when the terminal device has a plurality of sub-arrays, it may receive signals at the same timing via the plurality of sub-arrays. Therefore, if the base station device establishes associations between the CRI and each of a plurality of layers (codewords, transport blocks) with the downlink control information or the like for transmission, the terminal device may use the sub-array corresponding to each CRI and the receiving beam to receive multiple layers. Wherein, when using an analog beam and one sub-array having one receiving beam direction used at the same timing, and when the two CRIs corresponded to one sub-array of the terminal device being configured at the same time, the terminal device may not be able to receive with multiple receive beams. To address this issue, for example, the base station device divides a plurality of configured CSI-RS resources into groups, and obtains a CRI within the group using the same sub-array. If different sub-arrays are used between groups, the base station device may know the plurality of CRIs that can be set at the same timing. It is noted that the CSI-RS resource group may be a CSI-RS resource set. It is noted that the CRI that can be set at the same timing may be set as a QCL. Wherein, the terminal device may establish association with the QCL information for transmitting the CRI. For example, if the terminal device distinguishes the CRI that is a QCL and the CRI that is not a QCL for reporting, the base station device may not set the CRI that is a QCL at the same timing, and sets the CRI that is not a QCL at the same timing. Furthermore, the base station device may request CSI for each sub-array of the terminal device. In this situation, the terminal device reports the CSI for each sub-array. It is noted that, when reporting a plurality of CRIs to the base station device, the terminal device may only report the CRIs that is not a QCL.

The report setting is a setting related to the CSI report, and includes a report setting ID, a report setting type and/or a report value (amount). The report setting ID is used to determine the report setting. The reported value (amount) is the reported CSI value (amount). The report setting type is to report the setting for an aperiodic reported CSI value (amount), the setting for a periodic reported CSI value (amount), or the setting for a semi-persistent reported CSI value (amount).

Furthermore, to determine a preferable transmission beam of the base station device, a codebook that defines candidates of a predetermined precoding (beamforming) matrix (vector) is used. The base station device transmits the CSI-RS, and the terminal device obtains a suitable precoding (beamforming) matrix from the codebook and reports it to the base station device as PMI. Thereby, the base station device may know the transmitting beam direction suitable for the terminal device. It is noted that the codebook includes a precoding (beamforming) matrix for combining antenna ports and a precoding (beamforming) matrix for selecting antenna ports. When using the codebook for selecting antenna ports, the base station device may use a different transmitting beam directions for each antenna port. Therefore, if the terminal device reports a preferable antenna port as the PMI, the base station device may know the preferable transmitting beam direction. It is noted that the preferable receiving beam of the terminal device may be of the receiving beam direction associated with the CRI, or the preferable receiving beam direction may be determined again. When using the codebook for selecting an antenna port and the preferable receiving beam direction of the terminal device is the receiving beam direction associated with the CRI, the receiving beam direction for receiving the CSI-RS is ideally received in the receiving beam direction associated with the CRI. It is note that even when using the receiving beam direction associated with the CRI, the terminal device may also associate the PMI with the receiving beam direction. Furthermore, when using the codebook for selecting an antenna port, each antenna port may be transmitted from different base station devices (cells). In this situation, if the terminal device reports the PMI, the base station device may know which base station device (cell) is of a good communication quality. It is noted that, in this situation, the antenna ports of different base station devices (cells) may be set to be not QCLs.

Other than the serving cell, the terminal device 4A may receive an interference signal (adjacent cell interference) from an adjacent cell. The interference signal may be a PDSCH, PDCCH, or reference signal of an adjacent cell. In this situation, the removal or suppression of the interference signal in the terminal device may be effective. To remove or suppress the interference signal, the applicable methods are: enhanced-minimum mean square error (E-MMSE) that estimates the channel of the interference signal and apply linear weighted suppression, an interference canceller that generates and removes the interference signal copies; maximum likelihood detection (MLD) that searches all transmitting signal candidates of desirable signals and interference signals and detects the desirable signals, and reduced complexity-MLD (R-MLD) that reduces the number of transmitting signal candidates and set its computation to be less than MLD. To apply these methods, it may require to perform channel estimation of the interference signal, demodulation of the interference signal, or decoding of the interference signal. Therefore, in order to effectively remove or suppress the interference signal, the terminal device may need to know the parameters of the interference signal (adjacent cell). Therefore, in order to assist the terminal device to remove or suppress the interference signal, the base station device may transmit (set) one or more pieces of assist information including parameters of the interference signal (adjacent cell) to the terminal device. One or more of assist information may be set. The assist information includes a part or all of, for example, a physical cell ID, a virtual cell ID, a power ratio (power offset) of the reference signal and the PDSCH, a scrambling ID of the reference signal, quasi co-location information (QCL) information, the CSI-RS resource setting(s), the number of CSI-RS antenna ports, subcarrier spacing(s), resource assignment granularity, resource assignment information, DMRS setting(s), DMRS antenna port number, the number of layers, TDD DL/UL configurations, PMI, RI, modulation scheme, and modulation and coding scheme (MCS). It is noted that the virtual cell ID is an ID virtually assigned to a cell, and there may be cells that have the same physical cell ID but different virtual cell IDs. The QCL information is information relating to the QCL for predetermined antenna port(s), predetermined signal(s), or predetermined channel(s). On two antenna ports, when the long interval characteristics of the channel used for transmitting symbols on one antenna port can be deduced based on the channel used for transmitting symbols on the other antenna port, these antenna ports are referred to as QCL. The long interval characteristics include delay spread, Doppler spread, Doppler shift, average gain, average delay, spatial receiving parameters, and/or spatial transmitting parameters. That is, when the two antenna ports are QCL, the terminal device may consider the long interval characteristics at these antenna ports to be the same. The subcarrier spacing indicates a subcarrier spacing of the interference signal or a candidate of a subcarrier interval that may be used in the band. It is noted that when the subcarrier spacing included in the assist information is different to the subcarrier spacing used for communication with the serving cell, the terminal device may not remove or suppress the interference signal. The subcarrier spacing candidates that may be used in the band may indicate a subcarrier spacing that is typically used. For example, the typically-used subcarrier spacing may not include a low frequency subcarrier spacing as used in ultra-reliable and low-latency communications (emergency communications). The resource assignment granularity indicates the number of resource blocks that are not changed by precoding (beamforming). The DMRS setting indicates a PDSCH mapping type and additional configurations of the DMRS. DMRS resource assignment may change according to the PDSCH mapping type. For example, for the PDSCH mapping type A, the DMRS is mapped to the third symbol of the timeslot. Furthermore, for example, the PDSCH mapping type B is mapped to the first OFDM symbol of the assigned PDSCH resource. The additional configurations of the DMRS indicates whether there is an additional DMRS configurations or the additional configurations. It is noted that some or all of the parameters included in the assist information are transmitted (set) by higher layer signals. Furthermore, some or all of the parameters included in the assist information are transmitted with downlink control information. Furthermore, when each parameter included in the assist information indicates a plurality of candidates, the terminal device blind-detects a preferable parameter from the candidates. Furthermore, the terminal device performs blind detection on parameters that are not included in the assist information.

When a terminal device communicates with a plurality of receiving beam directions, surrounding interference situations change significantly according to the receiving beam directions. For example, an interference signal that was strong in one receiving beam direction may become weak in another receiving beam direction. The assist information of the cell that has low likelihood to have strong interference is not only meaningless, but may cause unnecessary calculation when determining whether a strong interference signal is received. Therefore, it may be ideal to have the assist information set based on the receiving beam direction. However, since the base station device may not know the receiving direction of the terminal device, it may be sufficient to associate the information related to the receiving beam direction with the assist information. For example, since the terminal device may associate the CRI with the receiving beam direction, the base station device may transmit (set) one or more pieces of assist information for each CRI. Furthermore, since the terminal device may associate the receiving beam direction with the time index of the synchronization signal block, the base station device may transmit (set) one or more pieces of assist information for each time index of the synchronization signal block. Furthermore, since the terminal device may associate the antenna port number (PMI) with the receiving beam direction, the base station device may transmit (set) one or more pieces of assist information for each antenna port number (PMI). Furthermore, when the terminal device includes a plurality of sub-arrays, the receiving beam direction has a likelihood to change for each sub-array, and therefore, the base station device may transmit (set) one or more pieces of assist information for each index associated with the sub-array of the terminal device. Furthermore, when a terminal device communicates with a plurality of base station devices (transmitting/receiving points), the terminal device is likely to communicate with each base station device (transmitting/receiving points) in different receiving beam directions. Therefore, the base station device may transmit (set) one or more pieces of assist information for each information indicating the base station device (transmitting/receiving point). The information indicating the base station device (transmitting/receiving point) may be set as a physical cell ID or a virtual cell ID. Furthermore, when the base station device (transmitting/receiving point) uses a different DMRS antenna port number, the information indicating the DMRS antenna port number and the DMRS antenna group becomes information indicating the base station device (transmitting/receiving point).

It is noted that the number of pieces of assist information set by the base station device for each CRI may be a common number. Herein, the number of assist information includes the type of assist information, the number of elements of each assist information (for example, the number of cell ID candidates), and the like. Furthermore, a maximum value is set for the number of pieces of assist information set by the base station device for each CRI, and the base station device may set the assist information for each CRI within range of the maximum value.

It is noted that, when the receiving beam direction of the terminal device changes, it is likely that the transmitting antenna is not QCL. Therefore, the assist information can be associated with the QCL information. For example, when the base station device transmits (sets) the assist information of a plurality of cells, a cell that is a QCL (or a cell that is not a QCL) may be instructed to the terminal device.

It is noted that the terminal device removes or suppresses the interference signal using the assist information associated with the CRI used in communicating with the serving cell.

Furthermore, the base station device may set the assist information associated with the receiving beam direction (CRI/time index of synchronization signal block/PMI/antenna port number/sub-array) and the assist information not associated with the receiving beam direction receiving beam direction (CRI/time index of synchronization signal block/PMI/antenna port number/sub-array). Furthermore, the assist information associated with the receiving beam direction and the assist information not associated with the receiving beam direction may be selectively used according to the terminal device capabilities or types. The capability or type of the terminal device may indicate whether the terminal device supports receiving beamforming. Furthermore, the assist information associated with the receiving beam direction and the assist information not associated with the receiving beam direction may be selectively used according to frequency bands. For example, the base station device does not set the assist information associated with the receiving beam direction at a frequency lower than 6 GHz. Furthermore, for example, the base station device sets the assist information associated with the reception beam direction only at a frequency higher than 6 GHz.

It is noted that the CRI may be associated with the CSI resource set setting ID. When instructing the CRI to the terminal device, the base station device may instruct the CRI and the CSI resource set setting ID together. When the CSI resource set setting ID is associated with one CRI or one receiving beam direction, the base station device may set the assist information for each CSI resource set setting ID.

In order to know the adjacent cell that is related to the receiving beam direction of the terminal device, the base station device requests the adjacent cell measurement of the terminal device. The adjacent cell measurement request includes information related to the reception beam direction of the terminal device and the cell ID. When the terminal device receives the adjacent cell measurement request, the terminal device measures the RSRP/RSRQ/RSSI of the adjacent cell and reports the measurements to the base station device together with information related to the receiving beam direction of the terminal device. It is noted that the information related to the receiving beam direction of the terminal device may include information indicating a CRI, a time index of a synchronization signal block, a sub-array of the terminal device, or a base station device (transmitting/receiving point).

Furthermore, when the terminal device moves, the surrounding environment may change instantaneously. Therefore, it may be ideal that the terminal device makes observations to the surrounding channel conditions, interference conditions at a predetermined timing, and reports the results to the base station device. Reporting of the results may be made periodically or on the basis of events. When reporting periodically, the terminal device periodically measures RSRP/RSRQ using a synchronization signal or CSI-RS and reports accordingly. When reporting on the basis of events, the event ID is associated with the reporting condition. The event IDs may include, for example, the events described in the subsequent paragraphs. The event IDs also set the thresholds desirable for conditional calculations (Threshold 1, Threshold 2, when desirable) and offset value(s).
Event A1: When the measurement result of the serving cell is better than the set threshold.
Event A2: When the measurement result of the serving cell is worse than the set threshold.
Event A3: When the measurement result of the adjacent cell is better than the measurement result of PCell/PSCell by the set offset value or more.
Event A4: When the measurement result of the adjacent cell is better than the set threshold value.
Event A5: When the measurement result of PCell / PSCell is worse than the set Threshold 1, and the measurement result of the adjacent cell is better than the set threshold 2.
Event A6: When the measurement result of the adjacent cell is better than the measurement result of SCell by a set offset value or more.
Event C1: When the measurement result at the CSI-RS resource is better than the set threshold.
Event C2: When the measurement result at the CSI-RS resource is better than the measurement result of the set reference CSI-RS resource by the offset value or more.
Event D1: When the measurement result of the CSI-RS resource that is different from the CRI is better than a set threshold.
Event D2: When the measurement result of the CSI-RS resource that is related to the CRI is worse than the set threshold.
Event D3: When the measurement result of the receiving beam direction that is not related to the CRI is better than the set threshold value.
Event D4: When the measurement result of the SS block index used for synchronization is worse than the set threshold.
Event D5: When the measurement result of the SS block index not used for synchronization is worse than the set threshold.
Event E1: When the time since the base station device determined the beam exceeds the threshold.
Event E2: When the time since the terminal device determined the beam exceeds the threshold.

The terminal device, when reporting based on the report settings, reports SS-RSRP/SS-RSRQ/CSI-RSRP/CSI-RSRQ/RSSI as a measurement result.

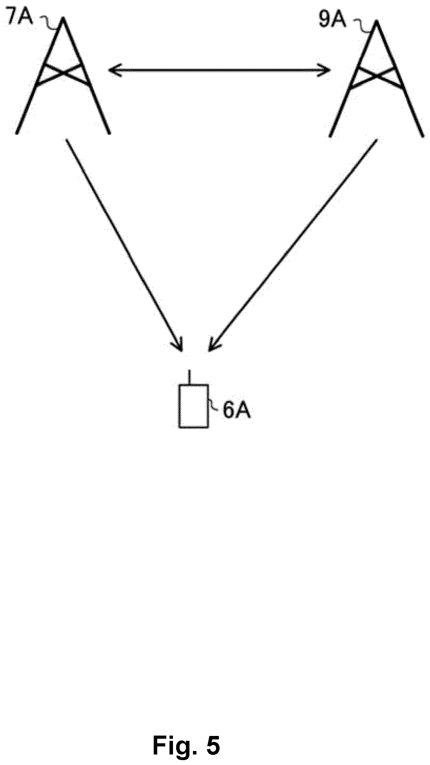

Figure 5 is a schematic diagram of a communication system according to an aspect of the present disclosure. The communication system shown in Figure 5 includes: a base station device 7A, a base station device 9A, and a terminal device 6A. The terminal device 6A may set the base station device 7A and/or the base station device 9A as a serving cell. Furthermore, when the base station device 7A or the base station device 9A includes a plurality of antennas, the plurality of antennas may be divided into a plurality of sub-arrays (panels, sub-panels), and may apply transmitting/receiving beamforming according to each sub-array. In this example, each sub-array may include a communications device. Unless otherwise specified, the configuration of the communications device is the same as the configuration of the base station device as shown in Figure 2. Furthermore, when the terminal device 6A includes a plurality of antennas, the plurality of antennas may be divided into a plurality of sub-arrays (panels, sub-panels), and may apply different transmitting/receiving beamforming according to each sub-array application. Each sub-array may include a communications device. Unless otherwise specified, the configuration of the communications device is the same as the configuration of the terminal device as shown in Figure 3. It is noted that the base station device 7A and the base station device 9A may be referred to as base station devices. It is noted that the terminal device 6A may be referred to as a terminal device.

In the uplink, the SRS may be used to determine a preferable transmitting beam for the terminal device and a preferable receiving beam for the base station device. The base station device may transmit (set) setting information related to the SRS using a signal of a higher layer. The setting information includes one or more SRS resource set settings. The SRS resource set setting includes an SRS resource set setting ID and/or one or more SRS resource settings. The SRS resource set setting ID may be used to determine the SRS resource set setting. The SRS resource setting includes: an SRS resource setting ID, the number of SRS antenna ports, an SRS transmission comb, an SRS resource mapping, an SRS frequency hopping, and an SRS resource setting type. The SRS resource setting ID may be used to determine the SRS resource setting. The SRS transmission comb indicates the frequency interval of the comb tooth spectrum and the location (offset) within the frequency interval. The SRS resource mapping indicates OFDM symbol locations and the number of OFDM symbols of the SRS arranged in a timeslot. The SRS frequency hopping is information indicating SRS frequency hopping. The SRS resource setting type indicates the operations in the time domain of the SRS resource setting. Specifically, it indicates the SRS resource setting being a setting of transmitting an SRS non-periodically (aperiodic), a setting for transmitting an SRS periodically, or a setting for transmitting an SRS semi-persistently.

When the terminal device is set with a plurality of SRS resources, if the terminal device transmits the SRS resources in different transmission beam directions, the base station device may determine a preferable SRS resource. The base station device only needs to transmit (instruct) the information indicating the SRS resources which is the SRS resource indicator (SRI) to the terminal device, the terminal device is then able to know that the transmitting beam direction transmitted with the SRS resource is preferable. It is noted that, in order to obtain the preferable receiving beam of the base station device, the base station device may request the terminal device to transmit with the same transmitting beam for a predetermined period. In response to the request from the base station device, the terminal device transmits in the instructed period, with the instructed SRS resource, and in the same transmitting beam direction as that transmitted in the instructed SRI.

When a terminal device includes a plurality of sub-arrays, the terminal device may communicate with a plurality of base station devices (transmitting/receiving points). In the example of Figure 5, the terminal device 6A may set the base station device 7A and the base station device 9A as serving cells. In this situation, with respect to the terminal device 6A, the transmitting beam direction suitable for communication with the base station device 7A is likely to be different to the transmitting beam direction suitable for communication with the base station device 9A. Therefore, the terminal device 6A can communicate with the base station device 7A and the base station device 9A at the same timing by transmitting signals in different sub-arrays in different transmitting beam directions.

When a terminal device transmits an SRS using a plurality of antenna ports in a SRS resource, each antenna port may use different transmitting beam directions. In this situation, if the base station device sends a transmitting instruction at the preferable antenna port number to the terminal device, the terminal device may know the preferable transmitting beam direction. It is noted that the base station device may also instruct the terminal device to transmit PMI (TPMI) using a codebook for selecting an antenna port. The base station device may also instruct the terminal device which codebook to refer to. The terminal device may refer the instructed codebook and use the transmitting beam direction corresponding to the antenna port number indicated by the TPMI.

When a terminal device includes a plurality of sub-arrays and can transmit at the same timing with the plurality of sub-arrays, different antenna port numbers may be assigned among the sub-arrays. In this situation, if the terminal device transmits an SRS using a transmitting beam from a different antenna port of the sub-array and receives a TPMI from the base station device, the terminal device can know the preferable sub-array and transmitting beam direction. Therefore, the terminal device can associate the TPMI with the sub-array and the transmitting beam direction.

It is noted that, when the terminal device communicates with a plurality of base station devices (transmitting/receiving points), the same signal (data) can be transmitted to each base station device (transmitting/receiving point), and different signals (data) can also be transmitted. When a terminal device communicates with a plurality of base station devices (transmitting/receiving points) with the same signal (data), signals received by a plurality of base station devices (transmitting/receiving points) may be combined to improve the receiving quality. Therefore, it is ideal that a plurality of base station devices (transmitting/receiving points) perform the receiving process in cooperation.

The base station device may use DCI for PUSCH scheduling. When a terminal device communicates with a plurality of base station devices, each base station device may transmit DCI for PUSCH scheduling. The DCI includes SRI and/or TPMI, and a terminal device can know a transmitting beam suitable for the base station device. Furthermore, when the terminal device communicates with a plurality of base station devices, the DCI from one base station device may be used to transmit the PUSCH to the plurality of base station devices. For example, when the DCI includes control information for a plurality of layers (codewords and transport blocks) and the SRI and/or TPMI is instructed (set) for each layer, each layer transmits with the suitable transmitting beam corresponded to each base station device. Accordingly, when the terminal device receives one DCI, the terminal device can transmit different signals (data) to a plurality of base station devices. Furthermore, when the DCI includes control information of one layer and when a plurality of SRIs and/or TPMIs are instructed (set) for one layer, the terminal device uses different transmitting beam to transmit one layer (the same data). Accordingly, when the terminal device receives one DCI, the terminal device can transmit the same signal (data) to a plurality of base station devices.

When a terminal device transmits to a plurality of base station devices at the same timing, it is ideal that each base station device knows the communication quality with the terminal device at the same timing. Accordingly, the base station device may instruct (trigger) a plurality of SRIs and SRS resources corresponding to each SRI with one DCI. In other words, if the terminal device transmits the SRS at the same timing in the transmitting beam direction corresponding to each SRI, each base station device then can know the communication quality with the terminal device at the same timing.

When the sub-arrays included in the terminal device use only one transmission beam direction at the same timing, they are transmitted to a plurality of base station devices at different timings using different sub-arrays. In this situation, when two SRIs are instructed (set) by one DCI from the base station device and the two SRIs are associated with the same subarray, the terminal device may not be able to transmit the two corresponding SRIs at the same timing. To avoid this problem, for example, the base station device may request the terminal device to: set a plurality of SRS resources in groups, and to transmit the SRS using the same sub-array within the group. Furthermore, if different sub-arrays are used among the groups, the base station device can know a plurality of SRIs that can be set at the same timing. It is noted that the groups of SRS resources may be the SRS resource sets. It is noted that the SRS (SRS resource) that may be set at the same timing may be set to be not QCL. In this situation, the terminal device may establish associations with the QCL information for transmitting the SRS. For example, if the terminal device distinguishes the SRS that is QCL from the SRS that is not the QCL and transmits accordingly, the base station device may not set the SRI that is the QCL at the same timing, and sets the SRI that is not the QCL at the same timing. Furthermore, the base station device may request the SRS for each sub-array of the terminal device. In this situation, the terminal device transmits SRS for each sub-array.

It is noted that, when the terminal device instructs that two SRIs cannot be transmitted at the same timing from the base station device, the terminal device may request the base station device to perform a beam recovery procedure for selecting a transmission beam again. The beam recovery procedure is the procedure performed when the tracking of a transmitting/receiving beam between the terminal device and the base station device is deviated which results in significant decrease in the communication quality, the terminal devices may need to obtain a new connection destination (transmitting beam of the base station device) in advance. The terminal device of the present implementation is in a state that the transmitting beam itself is secured, but the beam recovery procedure may be performed in order to eliminate a state with the setting that two SRIs cannot be transmitted at the same timing.

The terminal device of the present implementation may include a plurality of antennas (antenna panels) set with independent beamforming. The terminal device of the present implementation may use a plurality of antenna panels. The terminal device may switch between the plurality of antenna panels. However, when the antenna panel is not suitably selected, the transmitting quality may be significantly decreased, particularly in highfrequency transmission. Therefore, for selecting the beamforming set for the antenna, the terminal device may perform beam scanning (exploring) among the base station devices. The terminal device of the present implementation can transmit an SRS for beam scanning.

The base station device of the present implementation may notify the terminal device of the information relating to the duality (correlation, opposition) of the downlink and uplink transmission (channel) characteristics. With the information of the transmission characteristics, the base station device may notify the terminal device of the information of beam correspondence, spatial relations, spatial relation information (spatial relation information, receiving parameters). Herein, the beam correspondence includes: the relationship information between the receiving beamforming (spatial domain receiving filter, receiving weightings, receiving parameters, receiving space parameters) used when the terminal device receives a downlink signal and the transmitting beamforming (spatial domain transmitting filter, transmitting weightings, transmitting parameters, transmitting space parameters) used when transmitting an uplink signal.

The base station device may set beam correspondence for each signal transmitted by the terminal device. For example, the base station device can notify the terminal device of information indicating beam correspondence for the SRS transmitted by the terminal device. The base station device can notify the terminal device of SRS spatial relation information (SRS-SpatialRelationInfo). When the SRS spatial relation information indicates a predetermined signal (value, state), the terminal device may perform SRS transmission using beamforming associated with the predetermined signal. For example, if the SRS spatial relation information specifies a synchronization signal (SSB and PBCH), the terminal device may transmit the SRS using the receiving beamforming used when receiving the synchronization signal. Similarly, the base station device may notify the spatial relation information relating to other signals (for example, PUCCH/ PUSCH/RS/RACH and others) transmitted by the terminal device, and other signals (for example, PDCCH/PDSCH/RS) received by the terminal device. That is, the base station device can notify the terminal device of the spatial relation information of the first signal and the second signal. When the terminal device receives the spatial relation information of the first signal and the second signal and recognizes that the spatial relation information guarantees the spatial relations between the first signal and the second signal, the receiving parameter for receiving the first signal (or the transmitting parameter for transmitting the first signal) may be used to transmit the second signal (or receive the second signal).

The QCL includes at least the following four types, each having different parameters that can be considered the same. The base station device and the terminal device may set any one of the following QCL types between the antenna ports (or the signals associated with the antenna ports), and may also set a plurality of QCL types simultaneously.

QCL Type A: Doppler shift, Doppler spread, average delay, delay spread
QCL Type B: Doppler shift, Doppler spread
QCL Type C: Doppler shift, average delay
QCL Type D: Spatial Rx

When the PDSCH resource is scheduled using the downlink assignment, the terminal device can set receiving beamforming for receiving the PDSCH. In this situation, the terminal device can obtain information associated with the receiving beamforming from the DCI recorded with the downlink assignment. For example, the terminal device can obtain a transmission configuration indication (TCI) from the DCI. The TCI indicates the information associated with the QCL of the antenna port of the transmitted PDSCH. The terminal device can set receiving beamforming for receiving PDSCH (or the DMRS associated with PDSCH) by reading TCI. For example, when the DMRS associated with the SSB and the PDSCH in the TCI is set as the QCL in relation to the receiving parameter, the terminal device may use the receiving beam to receive the PDSCH, wherein the receiving beam is used in receiving the index SSB of the feedback to the base station device. It is noted that when the DCI cannot be obtained before the terminal device starts receiving the PDSCH (before the frame including the PDSCH is received by the terminal device) (the value of the scheduling offset indicating the time difference between the scheduling information and the PDSCH is less than a predetermined value), the terminal device can receive the PDSCH according to the TCI-default as in the default setting. It is noted that TCI-default is one of eight TCIs that are set. Furthermore, when the terminal device can receive the PDCCH, the terminal device can set the receiving beamforming based on the setting of the TCI-default.

The communications device (including the base station device and the terminal device) of the present implementation, when transmitting at least a part of the signal transmitted by the device itself in the unlicensed band, prior to the signal being transmitted in the unlicensed band, the communications device acquire a channel occupying time (or the channel transmitting permission time) for performing listen before talk (LBT, clear channel assessment (CCA)) in the unlicensed band.

When performing communication in an unlicensed band, when the channel is determined to be idle and carrier-sense is performed, the base station device/terminal device may occupy the channel for a period. The maximum value of the period that a channel can be occupied (channel occupation period) may be referred to as maximum channel occupancy time (MCOT). Furthermore, the MCOT may change according to the priority of data. The priority of data may be indicated by a priority class (channel access priority class). The priority classes are indicated by 1, 2, 3, and 4 in a descending order. Furthermore, the maximum value of the random period required for the LBT may change according to the priority class. It is noted that the random period is a product of a random positive integer, which is less than or equal to the contention window, and a timeslot period (for example, 9 microseconds). Furthermore, a random positive integer equal to or smaller than the contention window size (CWS) may also be referred to as a counter of carrier-sense (LBT). The CWS may change according to priority classes, transmission error rates, and the like. Furthermore, if the observed (detected) power is less than the energy detection threshold within at least a predetermined period (for example, 4 microseconds) in the timeslot period, the timeslot period is considered to be idle. Otherwise, the timeslot period is considered to be busy. Additionally, if the timeslot of the counter is idle, the carrier-sense is considered to be successful. It is note that the timeslot period may change according to the frequency band (frequency bandwidth, carrier frequency), and the timeslot period may be shortened in the high frequency band. Furthermore, determining of idle/busy period via timeslot may be changed according to the frequency band (frequency bandwidth, carrier frequency). That is, when it is determined that the high frequency band is idle, the period of observing (detecting) power being less than the energy detection threshold may be shorter.

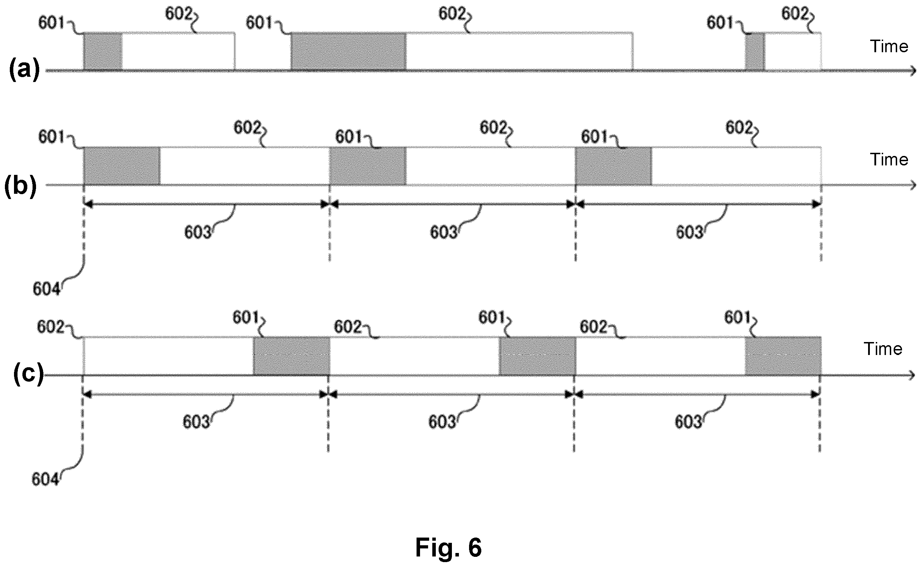

As disclosed above, the communications device of the present implementation secures the wireless medium, which is COT, via LBT. In addition to the method of acquiring COT non-periodically, COT may also be acquired periodically. Figure 6 is a schematic diagram of a communication method according to an aspect of the present disclosure. In Figure 6, the period 601, period 602, period 603 and cycle 604 respectively indicates: an idle period (sensing period), a channel occupancy time (COT, a data transmitting period, a communication period, a resource securing period), and a fixed frame period including the periods 601 and 602, and the cycle that is set with the period 603. As shown in Figure 6(a), the communications device may acquire the COT non-periodically. For example, when every time traffic occurs, the communications device can perform LBT during an idle period to acquire COT. In this situation, the idle period and the length of COT may not need to be the same.

On the other hand, as shown in Figure 6(b), the communications device may periodically acquire the COT. In this situation, the communications device can periodically set the fixed frame period with the cycle of cycle 604. Additionally, the communications device may acquire the COT by performing the LBT in the idle period that is set in the fixed frame period. It is noted that the idle period may be set at the end of the fixed frame period as shown in Figure 6(c). It is noted that the boundaries of the fixed frame period may be, or may not be, the same with each communications device or system operators. Furthermore, when carrier aggregation is performed with a license band, the offset between the boundaries of the fixed frame period and the PCell may be informed by a control signal.

The communications device may avoid a situation that the COT cannot be acquired when traffic occurs by periodically acquiring the COT, and thereby, transmits frames stably with low latency.

The communications device may acquire the COT even when no traffic is occurring. However, in this situation, an idle period may be generated in the acquired COT, and other wireless access systems may start communications during the idle period. Therefore, the communications device may transmit a resource securing signal (resource reservation signal, initial signal) for securing the acquired COT. The communications device may transmit the resource reservation signal at the beginning of the COT. Furthermore, the communications device may always transmit the resource securing signal in the COT. It is noted that the resource reservation signal may be a signal (for example, SS/PBCH block, common control information in a cell/system) that can be demodulated by a device of the wireless access system that is the same as the communications device (for example, a terminal device where the communications device performs communications). It may also be a (modulated) signal only having a predetermined transmitting power.

However, when the communications device periodically acquires the COT, the probability that other wireless access systems sharing the unlicensed band being able to secure the wireless medium may be reduced.

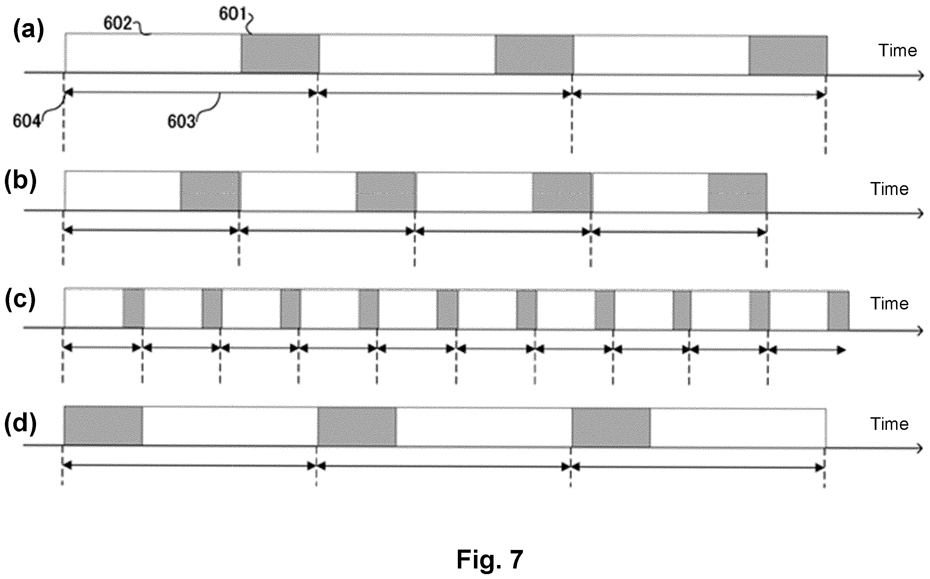

Therefore, the communications device of the present implementation may set a plurality of wireless medium acquisition classes (wireless medium securing classes) for the idle period, the COT, and the fixed frame period, and each class has a different value. Figure 7 is a schematic diagram of a communication method according to an aspect of the present disclosure. For example, as shown in Figure 7, the communications device of the present implementation can set a plurality of wireless medium acquisition classes, each having a different length for an idle period, a COT, and a fixed frame period. Herein, the length of the fixed frame period is not limited, but may be set to a combination of lower least common multiples when considering that there is other communications devices similarly acquiring the COT periodically. For example, it may set to the values by a power of two. For example, it may be set to the integer multiples of two. Furthermore, the combinations of the values of the fixed frame periods may include the combinations of values that are coprime. For example, the combinations of {2, 3, 5, 7}, {2, 3, 5, 11}, which are all-coprime combinations, can be set as combinations of values of the fixed frame period. Furthermore, the combinations of {2, 3, 7, 10}, {1, 3, 4, 10}, and {2, 3, 5, 10}, which are part-coprime combinations, can also be selected. Furthermore, it may not be necessary to unify the location relations of the idle period and the COT in each of the plurality of wireless medium acquisition classes set by the communications device. For example, as shown in Figure 7(d), the wireless medium acquisition class of the idle period may be set before the COT period.

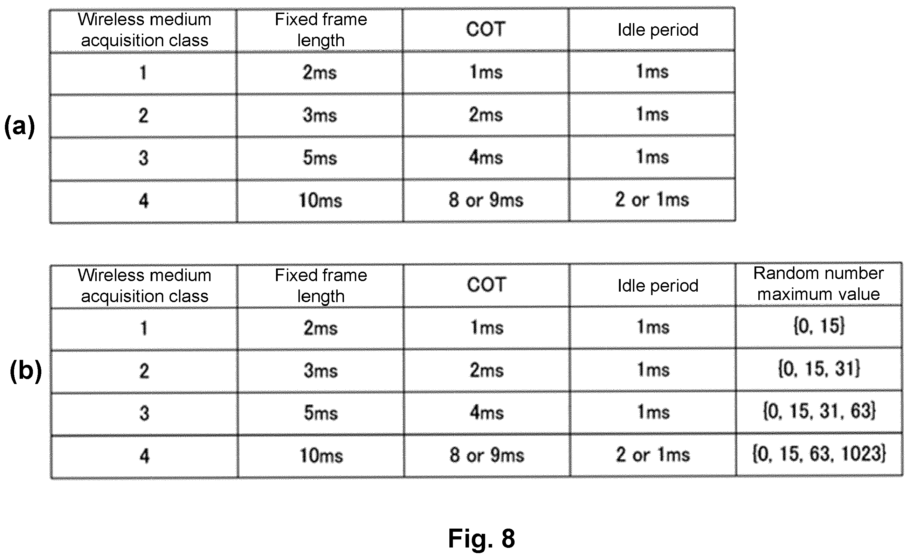

For example, the communications device of the present implementation can share a table representing a combination of idle period, COT, and fixed frame period with other communications devices. Figure 8 is an exemplary table representing the combinations of wireless medium acquisition classes used by the communications device of the present implementation. The communications device may select a wireless medium acquisition class from the wireless medium acquisition classes recorded in the table, and acquire the COT periodically. Furthermore, the table may further include the parameters set for each wireless medium acquisition class. For example, Figure 8(b) shows an example recorded with the parameters related to random number generation (the maximum value of the generated random numbers) that are further included.

The communications device of the present implementation may set a table representing the combinations of wireless medium acquisition classes for each subcarrier interval set by the communications device.

The communications device of the present implementation may switch between periodical the wireless medium acquisition class and non-periodical the wireless medium acquisition class. However, when the communications device selects one wireless medium acquisition class and acquires the COT once, the communications device must not switch the wireless medium acquisition class afterwards until a predetermined period has passed.

The communications device of the present implementation may notify the terminal device of the selected wireless medium acquisition class. The communications device may notify the selected wireless medium acquisition class via PDCCH. The communications device can set a default value as the wireless medium acquisition class. For example, the communications device can notify a terminal device connected to the communications device in advance via PBCH/SIB/MIB or PDCCH. In this situation, other than the wireless device acquisition class being specifically notified by the communications device, the terminal device recognizes that the communications device has acquired COT with the wireless medium acquisition class set by the default value. It is noted that the communications device may perform a change in reservation when changing the wireless medium acquisition class. For example, when the communications device knows that the wireless medium acquisition class is to be changed, the communications device notifies the terminal device in advance of the timing of changing the wireless medium acquisition class and a value indicating the changing destination of the wireless medium acquisition class.

Furthermore, the communications device of the present disclosure selects a configurable wireless medium acquisition class based on whether other wireless access systems (for example, a wireless LAN system) exist in the wireless channel secured by the LBT. Furthermore, the communications device may set two values for one wireless medium acquisition class. For example, when the communications device sets the wireless medium acquisition class as shown in Figure 7(a), and when the communications device may exist in a wireless channel in other wireless access systems, a COT may be set and the COT is longer than those when the communications device does not exist in a wireless channel in other wireless access systems.

When there are a plurality of communications devices of the present implementation and each of them acquires COT periodically, a method of fairly acquiring COT is desirable. The communications device of the present implementation may select a wireless medium acquisition class, before periodically acquiring COT, generate a random number (counter) according to a first predetermined rule. Additionally, the communications device performs the LBT during the idle period, and when no signal of another communications device is detected in the wireless channel, the random number can be subtracted according to a second predetermined rule. Additionally, when the random number is 0 during an idle period, a COT subsequent to the idle period can be acquired.

The communications device may define a maximum value (contention window size) in a random number generation as the first predetermined rule. This means, the information indicating the maximum value of the random numbers may be set for each wireless medium acquisition class (that is, the table indicating the wireless medium acquisition class may include information indicating the maximum value of the random numbers). The maximum value of the random number set for each wireless medium acquisition class may be set according to the length of the fixed frame period set for the wireless medium acquisition class.

As the second predetermined rule, the communications device may, during the idle period, subtract the random number according to a period that the wireless channel may be recognized as being in the idle state. For example, the communications device may set a time unit of the predetermined length (for example, 9 us), and may reduce the random number by 1 when the wireless channel can be recognized as being in the idle state only in the time unit. It is noted that when the communications device acquires the COT, the communications device generates a random number again. Furthermore, the communications device can ignore the random number that has been generated and generate a new random number when changing the wireless medium acquisition class.

The communications device of the present implementation can set a contention period for fairly acquiring the COT between the communications devices in the fixed frame period. The communications device may also include information indicating the length and location of the contention period in the wireless medium acquisition class.

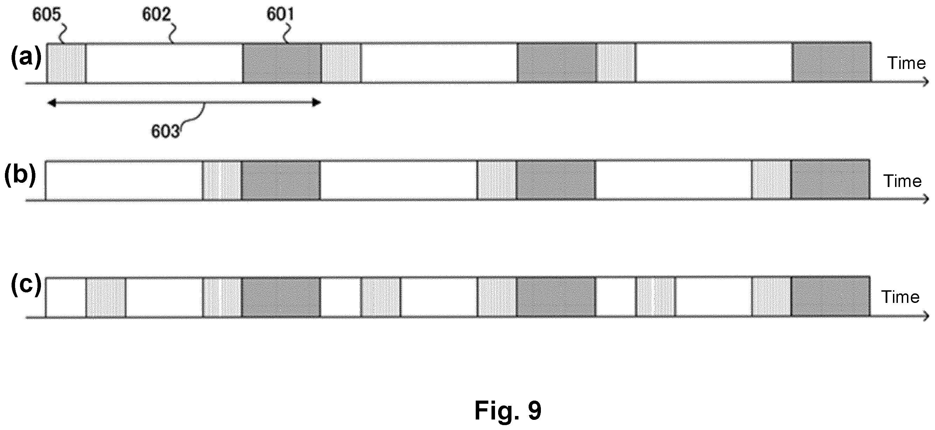

Figure 9 is a schematic diagram of a communication method according to an aspect of the present disclosure. In Figure 9, a period 605 indicates a competition period. In this situation, the communications device first recognizes via the LBT whether another communications device is transmitting a signal on the wireless channel during the idle period. Herein, in the idle period, the random number method as disclosed above may or may not be used. The communications device that recognizes the wireless channel as being in the idle state during the idle period may then transition to signal processing in the contention period.

In the competition period, the communications devices may each generate a random number. The random number may be generated for each fixed frame period or may be generated when the wireless medium acquisition class is changed. It is noted that the random number may be set to be common to the random number generated during the idle period, or may be generated independently of each other. The contention period of the present implementation is composed of a plurality of contention timeslots divided by a predetermined time unit. The length of the contention timeslot is not limited, however it may be set as, for example, 9 us, a symbol length or a sampling cycle. The communications device may continuously performs the LBT even in the contention period, and may reduce the random number by 1 when the wireless channel can be recognized as being in the idle state only in the contention timeslot. Then, the communications device having the random number being 0 during the contention period may start transmitting signals. In this situation, the signals transmitted by the communications device may be a resource securing signal as disclosed above or a data signal (control signal) with the destination being the terminal device.

When the communications device transmits data signals, the timing when the random number becomes 0 may not be consistent with the timeslot boundary (frame boundary, subframe boundary, symbol boundary) in some occasions. In this situation, the communications device may transmit a partial timeslot that includes a part of the timeslot being set as a no-signal period. The communications device does not transmit a signal during the no-signal period. However, the no-signal period is a period that the terminal device does not perform receiving process. Therefore, the communications device can transmit a signal in the no-signal period, but the signal is a signal that cannot be recognized (demodulated and decoded) by the terminal device.

Furthermore, the boundaries between the COT, the contention period, and the idle period may not be consistent with the timeslot boundaries in some occasions. In this situation, the communications device may transmit a partial timeslot with the signals before and after the boundary set to be the first half or the second half of the timeslot, or a partial timeslot with both side set to be no-signal periods. In this situation, the communications device does not transmit signals during the period that the no-signal period of the partial timeslot is consistent with the idle period.

When the communications device determines that the wireless channel is busy in the contention period, the communications device stops subtracting the random number. In this situation, the communications device may continue to use the random number in the next competition period. Furthermore, the communications device may re-generate the random number in the next competition period.

It is noted that, in the above disclosure, the contention period is set as a period determined for each wireless medium acquisition class. That is, the period that the communications device can perform carrier-sense in the competition period being predetermined. When the contention period is set at the beginning of the COT, the communications device of the present implementation may continue the method of subtracting the random number, if the wireless channel can be recognized as being in the idle state after the contention period. In this situation, the start timing of the contention period is defined only for each wireless medium acquisition class. Furthermore, the start timing of the competition period may be set to be common to some or all wireless medium acquisition classes. It is noted that, in this situation, the random number may be continued to be reduced in the idle period after the end of the COT. However, if the random number hypothetically becomes 0 during the idle period, no signal is transmitted during the idle period. Furthermore, if the LBT succeeds in the middle of COT, signals may be transmitted in the remaining period of COT.

The communications device of the present implementation does not limit the location of the contention period to any location. As shown in Figure 9(a), it may be set before the COT, which is the beginning of a fixed frame period. As shown in Figure 9(b), it can be set between the COT and an idle period. Furthermore, as shown in Figure 9(c), a plurality of contention periods may be set in the COT.

It is noted that, as shown in Figure 9, the contention period may be specifically defined as a period different to the COT, or it may also be defined as a period within the COT. In this situation, relating to the above-disclosed implementation, the starting location and/or the ending location of the contention period in the COT are set.

The length of the contention period may be set for each wireless medium acquisition class. For example, it may be set according to the length of the COT or the length of the fixed frame period. For example, the communications device may set a longer contention period in a wireless medium acquisition class, which has a length of a COT, than those in other wireless medium acquisition classes.

Furthermore, the communications device may set the rules for generating a random number used in the contention period according to the contention period set for each wireless medium acquisition class. For example, the communications device may set the maximum value of the random number to be larger in a wireless medium acquisition class having a long contention period than in other wireless medium acquisition classes.

For example, the communications device may set the maximum value of the random number under the condition that the random number not becoming 0 occurs in one competition period. For example, when the length of the contention period is 0.5 ms and the length of the contention timeslot is 9 us, the maximum value of the random number is set to 56 or greater. The communications device may reduce the probability of a single communications device continuously acquires the COT by controlling in this manner.

Relating to the above objective, the communications device may set the maximum value of the number of COTs that can be continuously acquired for each wireless medium acquisition class.

On the other hand, if it can be guaranteed that there is no communication device other than the communication device of the wireless channel, the procedure of the contention period becomes undesirable. Therefore, in this situation, the maximum value of the random number may be set to 0. For example, the communications device can preset 0 as the candidate values when presetting a plurality of maximum random number candidates for each wireless medium acquisition class, and the value may be set to be usable only under predetermined conditions.

The process of the contention period is the process of the COT that is set subsequent to the contention period. In the wireless medium acquisition classes that the idle period is set subsequent to the contention period, the communications device may acquire the COT that is set subsequent to the idle period.

Although it has been partly disclosed in the above disclosure, the communication device of the present disclosure may set various parameters for each wireless medium acquisition class. The parameters may be set according to whether there is a communications device belonging to other wireless access system in the wireless channel where the communications device secures a medium, or the number of communication devices belonging to the same wireless access system. The determination of whether there is another wireless access system may be made on the basis of the radio regulations of each country, or may be analyzed with the signals received by the communications device. Furthermore, if the communications device, for the frequency configuration, is a license-free system or a registered station system, the determination can be made based on the number of registered stations in each country.

The communications device may set the terminal device with an autonomous transmitting to in the periodically acquired COT. Herein, the autonomous transmitting means that the terminal device performs carrier-sense to secure a communication medium, and performs uplink signal transmission. The communication device may notify whether the terminal device can perform autonomous transmitting in the COT of the next fixed frame period in the fixed frame period. The terminal device, when receives the above signaling from the communications device, can determine whether autonomous transmitting can be performed according to the instruction. If the above signaling is not received, the terminal device may recognize that the autonomous transmitting cannot be performed.

The communications device of the present implementation may notify the terminal device of information indicating the selected wireless medium acquisition class, and thereby, notify the terminal device that the communications device periodically acquires the COT.

According to the method disclosed above, the communications device is able to effectively/efficiently and fairly secure a wireless medium even in an unlicensed band where another wireless access system may exist, and thereby, improves frequency usage efficiency.

### 2. Second Implementation

In the second implementation, contention in the frequency domain is performed in order to ensure fairness among a plurality of communications devices.

When the communications device of the present implementation periodically acquires the COT, the communications device sets the wireless medium acquisition class and acquires the COT, in a similar manner to the first implementation. However, the communications device of the present implementation does not set a contention period in the fixed frame period.

The communications device of the present implementation transmits a signal from the start of the COT when the COT is acquired by the LBT and the contention procedure during the idle period. However, in this situation, the frequency location of the signal transmitting is randomly set.

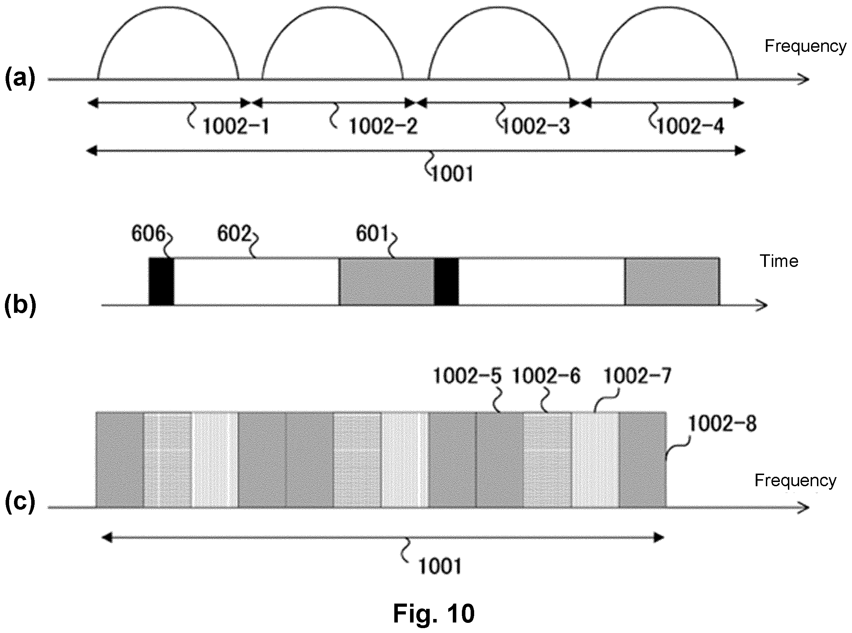

Figure 10 is a schematic diagram of a communication method according to an aspect of the present disclosure. In Figure 10, a frequency band 1001 indicates a frequency band that the communications device performs carrier-sense. The communications device of the present implementation randomly selects one of a plurality of frequency bands 1002 included in the frequency band 1001, and performs communication accordingly. By performing control in this manner, even when a plurality of communications devices determine that the COT may be secured during the idle period, the probability of signal collision in the COT can be reduced.

It is noted that the frequency band 1002 that is randomly selected by the communications device may be randomly selected for each fixed frame period. The frequency band 1002 may be selected based on a cell ID based on a predetermined rule for each communications device.

However, in this situation, a gap occurs between the frequency bandwidth that the communications device performs carrier-sense and the frequency bandwidth that actual data communications is performed. Therefore, the communications device of the present implementation transmits a signal at the start of COT (COT start signal), and the signal has the same bandwidth as the frequency bandwidth that carrier-sense is performed. In this situation, the communications device generates the signal according to a predetermined rule. That is, when there are a plurality of communications devices of the present implementation, the signal transmitted at the start of the COT may be shared between the communications devices.

It is noted that the terminal device may not necessarily need to recognize the COT start signal. For example, the communications device can notify the terminal device of information indicating the timing of starting signal demodulation. However, the communications device can also notify the time of the transmission completion of each COT start signal as the start timing. By performing control in this manner, the terminal device may perform communications without taking the COT start signal into consideration.

The COT start signal may be a pilot signal distributed in the frequency direction. In this situation, the communications device may periodically transmit the COT start signal within the COT. Herein, the periodic transmission includes the communications device continuously transmitting the COT signal.

It is noted that the communications device may perform carrier-sense in an idle period in a frequency band 1002 randomly selected at the start of COT. In this situation, a gap does not occur between the bandwidth of the frequency band 1001 for performing carrier-sense and the bandwidth of the frequency band 1002, therefore it may not be necessary to transmit the COT start signal as disclosed above.

Furthermore, according to the example of Figure 10(a), the frequency band 1002 selected by the communications device may be defined by dividing the frequency band 1001 into equal intervals. However, as shown in Figure 10(c), the communications device of the present implementation may also define the frequency band 1002 by distributing in the frequency band 1001. In this situation, regardless to which frequency band 1002 the communications device selects, the communications device may fully occupy the frequency band 1001 that the carrier-sense is performed, and therefore, the COT start signal may not need to be transmitted.

According to the method disclosed above, fairness between communications devices may be ensured by effectively using the frequency domain.

It is noted that the communications device according to the present disclosure may switch settings between a method of acquiring COT periodically and a method of acquiring COT non-periodically. The communications device may notify the terminal device of which method of acquiring the COT is to be used. The communications device may notify the terminal device that the method of periodically acquiring the COT is started.

### 3. Common features for all implementations

The programs operated in the devices of the present disclosure may be implemented by controlling a Central Processor Unit (CPU) and causing a computer to realize the program functions of the present disclosure. The program or the information being processed by the program may be stored in volatile memory (e.g., random access memory (RAM)), a hard disk drive (HDD), non-volatile memory (e.g., flash memory), or any other suitable memory system.

It is noted that the program that realizes functions of each implementation in the present disclosure may be stored on a computer-readable medium. Computer systems through reading the programs stored in the storage medium executes the programs to realize the corresponding functions. The "computer system" disclosed herein may be a computer system embedded in equipment, may include an operating system or hardware (e.g., peripheral equipment). A "computer-readable medium" may be a semiconductor storage medium, optical storage medium, a magnetic storage medium, a storage medium for short-term dynamic storing of programs, or any other storage medium readable by a computer.

Furthermore, various characteristics or function modules used in the equipment disclosed in the implementations herein may be installed or implemented by electronics or circuits such as a monolithic or multiple-chip integrated circuit. The electronics designed for implementing the functions disclosed herein may include general processors, a digital signal processor (DSP), Applications Specific Integrated Circuitry (ASIC), Field Programmable Gate Arrays (FPGAs) or any other programmable logic devices, discrete gate or transistor logic, discrete hardware assembly, or any combination of the disclosed devices. A general processor may be a microprocessor, or any present processor, controller, microcontroller, or state machine. The disclosed electronics may be digital electronics or analog electronics. As semiconductor technology continues to improve, it is noted that there may be new integrated circuit technology replacing present integrated circuits, one or more implementations of the present disclosure may be implemented with the new integrated circuit technology.

It is noted that, the present disclosure is not limited to the disclosed implementations. Although various examples are disclosed in each implementation, it should be noted that the present disclosure is not limited thereto. Fixed or non-mobile electronic equipment installed indoor or outdoor may be in a form of terminal equipment or communications equipment. For example, the electronic equipment may be Audio-Video equipment, kitchen equipment, cleaning equipment, air-conditioner, office equipment, vending machines, other home appliances, terminal devices or communications devices.

As above, the implementations of the present disclosure are disclosed in detail with reference to the accompanying drawings. However, the implementations are not limited to the disclosed implementations. The present disclosure also includes design variations without departing from the scope or spirit of the disclosed concepts. Furthermore, the present disclosure also encompasses modifications within the scope of the claims, implementations suitably combining various disclosed implementations. Additionally, the disclosed implementations may have component substitutions that have similar effect.

### Industrial Applicability

The present disclosure is suitable for communications devices and communication methods.

## Claims

1. A communications device for performing carrier-sense, the communications device comprising:
a reception unit for executing carrier-sense for reserving a wireless medium;
a control unit for setting a plurality of wireless medium acquisition classes; and
a transmission unit for transmitting a radio signal,
wherein the wireless medium acquisition classes represent a value at least indicating a data transmission period and an idle period,
the plurality of wireless medium acquisition classes are classified based on a length of a fixed frame period including at least the data transmission period and the idle period, and
the transmission unit transmits a signal including information indicating a selection of the wireless medium acquisition classes is performed.

2. A communications device according to claim 1, wherein,
the wireless medium acquisition class further indicates a value indicating a contention period,
the contention period is included in the data transmission period.

3. A communications device according to claim 2, wherein,
the contention period is divided by timeslot having a predetermined period,
a random number is generated with a predetermined value associated with the contention period as a maximum value,
the random number is subtracted based on a result of the carrier-sense during the contention period, and
a length of a period obtained by multiplying the random number and the predetermined period is longer than the contention period.

4. A communications device according to claim 3, wherein,
the contention period is set at a start of the data transmission period,
after the contention period, the random number is continuously subtracted based on a result of the carrier-sense in the data transmission period.

5. A communications device according to claim 2, wherein,
the contention period is set at a start of the data transmission period.

6. A communications device according to claim 2, wherein,
the idle period is set to follow the data transmission period,
the contention period is set at an end of the data transmission period.

7. A communications device according to claim 1, wherein,
the control unit divides the wireless medium performing the carrier-sense into a plurality of frequency bands,
the transmission unit randomly selects any one of the plurality of frequency bands during the data transmission period.

8. A communications device according to claim 7, wherein,
the transmission unit transmits a signal occupying a predetermined bandwidth in the wireless medium performing the carrier-sense at a start of the data transmission period.

9. A communications device according to claim 8, wherein,
the transmission unit generates a signal occupying the predetermined bandwidth based on a predetermined rule.

10. A communication method having steps of performing carrier-sense, comprising the steps of:
executing carrier-sense for reserving a wireless medium;
setting a plurality of wireless medium acquisition classes; and
transmitting a radio signal,
wherein the wireless medium acquisition classes represent a value at least indicating a data transmission period and an idle period,
the plurality of wireless medium acquisition classes are classified based on a length of a fixed frame period including at least the data transmission period and the idle period, and
transmitting a signal including information indicating a selection of the wireless medium acquisition classes is performed.
